(19) **Europäisches Patentamt / European Patent Office / Office européen des brevets**

(11) **EP 3 032 910 B1**

(12) **EUROPEAN PATENT SPECIFICATION**

(45) Date of publication and mention
of the grant of the patent:
**05.09.2018 Bulletin 2018/36**

(51) Int Cl.:
**H04W 74/08** *(2009.01)* **H04W 72/04** *(2009.01)*

(21) Application number: **14791890.8**

(86) International application number:
**PCT/CN2014/000531**

(22) Date of filing: **26.05.2014**

(87) International publication number:
**WO 2014/176935 (06.11.2014 Gazette 2014/45)**

(54) **RANDOM ACCESS CHANNEL RESOURCE ALLOCATION METHOD AND SYSTEM**

VERFAHREN UND SYSTEM ZUR ZUWEISUNG VN DIREKTZUGRIFFSKANALRESSOURCEN

PROCÉDÉ ET SYSTÈME D'ALLOCATION DE RESSOURCES DE CANAL D'ACCÈS ALÉATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2013 CN 201310349543**

(43) Date of publication of application:
**15.06.2016 Bulletin 2016/24**

(73) Proprietor: **ZTE Corporation
Shenzhen, Guangdong 518057 (CN)**

(72) Inventors:
• **LIU, Kun
Shenzhen
Guangdong 518057 (CN)**
• **DAI, Bo
Shenzhen
Guangdong 518057 (CN)**
• **LU, Zhaohua
Shenzhen
Guangdong 518057 (CN)**

• **XIA, Shuqiang
Shenzhen
Guangdong 518057 (CN)**
• **FANG, Huiying
Shenzhen
Guangdong 518057 (CN)**
• **SHI, Jing
Shenzhen
Guangdong 518057 (CN)**
• **LI, Xincai
Shenzhen
Guangdong 518057 (CN)**

(74) Representative: **Modiano, Gabriella Diana et al
Modiano & Partners (DE)
Thierschstrasse 11
80538 München (DE)**

(56) References cited:
WO-A2-2012/173428    CN-A- 102 056 300
CN-A- 102 740 492    CN-A- 103 220 811
CN-A- 103 582 073    CN-A- 103 813 467
US-A1- 2013 083 753

**Description**

Technical Field

The present invention relates to the field of communication, and more particularly, to a method and system for configuring random access channel resources.

Background of the Related Art

The Machine Type Communication (MTC) User Equipment (MTC UE), also called a Machine to Machine (M2M) user communication device, is a main application form of the Internet of Things at the present stage. Low power consumption and low cost are the important guarantee for large-scale application of the MTC UE. M2M devices deployed in the market at present are mainly based on Global System of Mobile communication (GSM) systems. In recent years, due to the improvement of spectral efficiency of Long Term Evolution (LTE)/Long Term Evolution-Advanced (LTE-A), more and more mobile operators choose the LTE/LTE-A as an evolution direction of broadband wireless communication systems in the future. Multiple-type LTE/LTE-A-based M2M data services will be more attractive. Only when the cost of the LTE-M2M devices is lower than that of the MTC terminal of the GSM systems, can the M2M services be truly switched from the GSM systems to the LTE systems.

At present, main alternative methods for decreasing the cost of the MTC user terminal include: reducing the number of receiving antennas of the terminal, decreasing the baseband processing bandwidth of the terminal, decreasing the peak rate supported by the terminal, and utilizing a half-duplex mode, etc. Although the decrease of the cost means the decrease of performance, the demand for coverage of cells of the LTE/LET-A systems cannot be decreased, thus an MTC terminal configured with low cost needs adoption of some measures so as to meet the demand for coverage performance of the existing LTE terminal. In addition, the MTC terminal may be located in places such as a basement and corners of wall, and the like, and the located scene is worse than that for a common LTE UE. In order to make up for the decreased coverage resulted from the penetration loss, part of the MTC UEs need higher performance improvement, thus it is necessary to improve the uplink and downlink coverage for the part of the MTC UEs with respect to the scenario. How to ensure the access quality of users is a problem required to be considered firstly, so it is necessary to make an improvement design for the Physical Random Access Channel (PRACH) of the LTE/LTE-A systems to ensure that the MTC UE can access the systems normally.

Position information of time-frequency resources occupied by the random access response (RAR) message in the LTE/LTE-A systems is contained in Downlink Control Information (DCI) and is sent through the Physical Downlink Control Channel (PDCCH). Additionally, the Cyclic Redundancy Check (CRC) of 16 bits is also contained in the DCI information described above, and the above CRC is further scrambled by using a Random Access Radio Network Temporary Identity (RA-RNTI) of 16 bits, and the scrambling manner is:

$$c_k = (b_k + a_k) \bmod 2 \qquad k=0,1,\cdots,15$$
.

Wherein, $b_k$ is the ($k$+1)th bit in the CRC; $a_k$ is the ($k$+1)th bit in the RA-RNTI; and $c_k$ is the ($k$+1)th bit generated after the scrambling.

Since the improvement design is made for the Physical Random Access Channel (PRACH) of the LTE/LTE-A systems to ensure that the MTC UE can access the systems normally, the improvement design for the Random Access Response (RAR) message of the LTE/LTE-A systems is also required to ensure that the MTC UE can perform receiving normally.

The document US2013083753A1 discloses Systems and/or methods for supporting communications at a reduced bandwidth with a full bandwidth network such as a long-term evolution (LTE) network. For example, inband assignments such as downlink assignments and/or uplink grants may be provided and/or received and transmissions may be monitored and/or decoded based on the inband assignment. Additionally, information (e.g. a definition or configuration) associated with an ePDCCH may be provided and/or received and ePDCCH resources may be monitored and/or decoded based on such information. An indication for support of a reduced bandwidth by the full bandwidth network may also be provided and/or received and control channels in the reduced or narrow bandwidth may be monitored and/or decoded based on the indication. A PRACH preamble and/or a multi-type subframe definition may also be provided and/or used for support of such a reduced bandwidth.

The document WO2012173428A2 discloses a method and an apparatus for performing a random access process in a wireless communication system. A wireless device transmits a random access preamble, based on a random access resource, to a base station, then receives a random access response to the random access preamble. The random-access resource can be set to the wireless device or to the group to which the wireless device belongs.

The document CN102056300A discloses a component carrier configuration method, user equipment and base station.

The document CN102056300A discloses an information processing method, a method for Machine Type Communication (MTC) UE random accessing LTE system, a base station and an MTC UE. The information processing method comprises: a base station sends to MTC UE resource information of Physical Random Access Channel (PRACH) configured for MTC UE via Physical Downlink Share Channel (PDSCH) indicated by downlink control channel, and the base station, after receiving a random access preamble sequence sent from MTC UE, sends downlink control information and Random Access Response (RAR). The downlink control channel is enhanced Physical Downlink Control Channel (ePDCCH), or, the downlink control channel is ePDCCH or physical downlink control channel according to the indication information bore by Physical Broadcast Channel (PBCH), or, when bandwidth of LTE system is less than or equal to the receiving bandwidth of MTC UE, the downlink control channel is physical downlink control channel, and when bandwidth of LTE system is greater than the receiving bandwidth of MTC UE, the downlink control channel is ePDCCH. This document solves the problem of bandwidth-limited MTC UE random accessing LTE system.

Content of the Invention

The present invention provides a method and system for configuring random access channel resources so as to solve the problem of access of an MTC UE in LTE/LET-A systems, as defined in independent method claim 1 and independent system claim 17. Further advantageous features of the invention are defined in the dependent claims.

According to the invention, a method for configuring random access channel resources comprises: first nodes sending random access channel resource configuration information to second nodes, wherein the random access channel resource configuration information is indicated by one or a plurality of pieces of random access channel configuration information.

According to the invention, the configuration information of first resources is at least comprised in the random access channel configuration information, the first resources are one of the following:

resources used for sending random access signalings and allocated to the second nodes; and
starting resources used for sending the random access signalings and allocated to the second nodes.

According to the invention, the first resources occupy one or a plurality of first time domain measurement units in a time domain and occupy one or a plurality of first frequency domain measurement units in a frequency domain.

Preferably, the first time domain measurement unit is one of the following:
a Frame, a Ssubframe, a half frame, a time slot, an OFDM symbol, a physical resource block (PRB) and a physical resource block group.

Preferably, the first frequency domain measurement unit is one of the following:
a subcarrier, a physical resource block (PRB) and a physical resource block group.

According to the invention, the configuration information of the first resources comprises at least one of the following:

configuration index information of the first resources; and
frequency domain offset information of the first resources.

Preferably, the configuration index information of the first resources indicates any one or a plurality of pieces of the following information:

within a predefined time domain period,time domain position distribution information occupied by the first resources within the predefined time domain period, wherein the predefined time domain period is described by using the first time domain measurement units and is configured by a system or sent by the first nodes;
quantity information of the first resources within a predefined time domain period, wherein the predefined time domain period is described by using the first time domain measurement units and is configured by a system or sent by the first nodes;
format information of the random access signalings;
information of whether the first resources support frequency hopping; and
frequency hopping pattern information of the first resources.

Preferably, being configured by the system means being configured by a standard or by a network or by a network upper layer.

Preferably, position information of the first resources in the frequency domain is determined by the frequency domain offset information of the first resources.

Preferably, position information of the first resources in the frequency domain is at least one of the following:

information of a starting resource position of the first resources in the frequency domain;

information of an end resource position of the first resources in the frequency domain; and

information of an occupied resource position of the first resources in the frequency domain.

Preferably, the information of the starting resource position, the information of the end resource position and the information of the occupied resource position are measured by using the first frequency domain measurement units.

Preferably, frequency domain position distribution information of the first resources is determined by the frequency domain offset information of the first resources and the configuration index information of the first resources.

Preferably, there are a plurality of positions of the first resources in the frequency domain.

Preferably, positions of a plurality of the first resources in a same time domain position are different in the frequency domain.

Preferably, the random access channel configuration information further comprises:

frequency domain position distribution spacing information of the first resources.

Preferably, the frequency domain position distribution information of the first resources is determined by the frequency domain offset information of the first resources, the frequency domain position distribution spacing information of the first resources and the configuration index information of the first resources.

Preferably, when the random access channel resource configuration information is indicated by the plurality of of random access channel configuration information, the configuration information of the first resources comprised in each piece of the random access channel configuration information is different.

According to the invention, the random access channel resources are divided into one or a plurality of random access channel resource subsets, the random access channel resources are multiplexed between the random access channel resource subsets by means of time division multiplexing and/or frequency division multiplexing and/or code division multiplexing.

Preferably, when the random access channel resources are multiplexed between the random access channel resource subsets by means of time division multiplexing,

first resources whose time domain positions are within a predefined time domain set in the first resources are allocated to a random access channel resource subset; or,

first resources whose time domain positions are within a predefined time domain set and which have same frequency domain positions in the first resources are allocated to a random access channel resource subset; or,

first resources whose time domain positions are within a predefined time domain set and which are at predefined frequency domain positions in the first resources are allocated to a random access channel resource subset.

Preferably, the predefined time domain set comprises one or a plurality of time domain time points, and the time domain time points are measured by the first time domain measurement units, the one or the plurality of time domain time points are distributed continuously or discretely in the time domain.

Preferably, the predefined frequency domain positions are required to meet the following conditions:

frequency domain positions of the first resources on two adjacent time domain time points are different; and/or,

there are N different types of frequency domain positions among the predefined frequency domain positions, and the predefined time domain set is divided into N subsets, the frequency domain positions of the first resources in each subset correspond to one of the predefined frequency domain positions, N is an integer greater than or equal to 1.

Preferably, when the random access channel resources are multiplexed between the random access channel resource subsets by means of frequency division multiplexing,

first resources whose frequency domain positions are within a predefined frequency domain set in the first resources are allocated to a random access channel resource subset; or,

first resources whose frequency domain positions are within a predefined frequency domain set and which are at predefined time domain positions in the first resources are allocated to a random access channel resource subset.

Preferably, the predefined frequency domain set comprises one or a plurality of frequency domain points, and the frequency domain points are measured by the first frequency domain measurement units, the one or the plurality of frequency domain points are distributed continuously or discretely in the frequency domain.

Preferably, the predefined time domain positions comprise one or a plurality of time domain time points, and the time domain time points are measured by the first time domain measurement units, the one or the plurality of time domain time points are distributed continuously or discretely in the time domain.

Preferably, when the random access channel resources are multiplexed between the random access channel resource subsets by means of time division multiplexing and frequency division multiplexing, the first resources within a predefined set are allocated to a random access channel resource subset.

Preferably, elements in the predefined set are one or a plurality of sequenced first resources.

Preferably, an sequencing rule of the first resources is configured by the system.

According to the invention, when the random access channel resources are multiplexed between the random access channel resource subsets by means of code division multiplexing, a random access channel resource subset is formed from at least one predefined random access sequence set.

According to the invention, one or a plurality of random access sequences are contained in the predefined random access sequence set.

According to the invention, the random access channel resource subset supports one type or a plurality of types of the second nodes transmitting the random access sequences.

According to the invention, the types of the second nodes are divided according to one of the following principles:

coverage improvement levels required to be supported by the second nodes;

the number of repeated transmissions of the random access sequences required to be supported by the second nodes,

repeat times of a physical broadcast channel (PBCH) used when the PBCH is decoded successfully by the second nodes,

repeat times of a master information block (MIB) message when the MIB message is decoded successfully by the second nodes,

repeat times of a system information block (SIB) message when the SIB message is decoded successfully by the second nodes, and

repeat times of the MIB message when the PBCH is decoded successfully by the second nodes.

According to the invention, the second nodes are one or a plurality of terminals or one or a plurality of terminal groups, wherein the terminal is MTC UE.

Preferably, the first nodes are at least one of the following:
a Macrocell, a Microcell, a Picocell, a Femtocell, a low power node (LPN), aRrelay and a Small Cell.

Preferably, after the step of the first nodes sending the random access channel resource configuration information to the second nodes, the method further comprises:
the second nodes determining corresponding random access channel resources according to the random access channel configuration information and sending random access signalings to the first nodes by using the random access channel resources.

Preferably, after the step of the second nodes determining the corresponding random access channel resources according to the random access channel configuration information and sending the random access signalings to the first nodes by using the random access channel resources, the method further comprises:
the first nodes sending random access response signalings to the second nodes to respond to the random access signalings sent by the second nodes.

Preferably, random access response information of one or a plurality of the second nodes is carried in the random access response signalings.

Preferably, the one or the plurality of the second nodes are configured by the system or the first nodes.

Preferably, the one or the plurality of the second nodes have any one or a plurality of the following properties:

the one or the plurality of the second nodes belong to the same type,
coverage improvement levels required to be supported by the one or the plurality of the second nodes are same,
the number of repeated transmissions of the random access sequences required to be supported by the one or the plurality of the second nodes are same, and
RA-RNTIs calculated by the one or the plurality of the second nodes are same.

Preferably, the types of the one or the plurality of the second nodes are configured by the system;

the coverage improvement levels required to be supported by the one or the plurality of the second nodes are configured by the system; and

the number of the repeated transmissions of the random access sequences required to be supported by the one or the plurality of the second nodes are configured by the system.

Preferably, information of the number of repeated transmissions of the random access response signalings is indicated by the first nodes.

Preferably, the first nodes indicate the information of the number of repeated transmissions of the random access response signalings in at least one of the following manners:

indicating the information of the number of repeated transmissions of the random access response signalings in downlink control information;

a mapping relationship existing between information of maximum repeat times supported by a PBCH sent by the first nodes and the information of the number of repeated transmissions of the random access response signalings;

a mapping relationship existing between information of maximum repeat times supported by MIB information sent by the first nodes and the information of the number of repeated transmissions of the random access response signalings;

a mapping relationship existing between information of maximum repeat times supported by SIB information sent by the first nodes and the information of the number of repeated transmissions of the random access response signalings;

a mapping relationship existing between information of repeat times supported by the PBCH and the information of the number of repeated transmissions of the random access response signalings;

a mapping relationship existing between information of repeat times supported by the MIB and the information of the number of repeated transmissions of the random access response signalings; and

a mapping relationship existing between information of repeat times supported by the SIB and the information of the number of repeated transmissions of the random access response signalings.

Preferably, the information of the number of repeated transmissions of the random access response signalings is indicated by the types of the second nodes or the coverage improvement levels or the supported number of repeated transmissions of the random access sequences.

The present invention further provides a system for allocating random access channel resources, which comprises first nodes and second nodes;

the first nodes are configured to: send random access channel resource configuration information to the second nodes, wherein the random access channel resource configuration information contains indications of one or a plurality of pieces of random access channel configuration information.

According to the invention, the second nodes are one or a plurality of terminals or one or a plurality of terminal groups, wherein the terminal is MTC UE.

Preferably, the first nodes are at least one of the following:

a Macrocell, a Microcell, a Picocell, a home eNode B, anLPN, a Relay and a Small Cell.

Preferably, the second nodes are configured to: determine corresponding random access channel resources according to the random access channel configuration information and send random access signalings to the first nodes by using the random access channel resources.

According to the invention, the first nodes are further configured to: send random access response signalings to the second nodes to respond to the random access signalings sent by the second nodes.

The embodiments of the present invention provide a method and system for configuring random access channel resources, the first nodes send random access channel resource configuration information to the second nodes, wherein the random access channel resource configuration information contains indications of one or a plurality of pieces of random access channel configuration information, which indicates the random access channel resources for the second nodes sending the random access signalings, thereby implementing the random access channel resource configuration of the MTC UE in the LTE/LTE-A systems and solving the problem of access of the MTC UE in the LTE/LET-A systems.

Brief Description of Drawings

FIG. 1 is a schematic diagram of random access channel resource configuration information in a method for configuring random access channel resources provided in the embodiment 1 of the present invention;

FIG. 2 is a schematic diagram of an ordering principle of PRACH starting resources in the embodiment 1 of the present invention;

FIG. 3 is a schematic diagram of PRACH resources occupied by each subset in the embodiment 2 of the present invention;

FIG. 4 is a schematic diagram of PRACH starting resources occupied by different types of second nodes in the embodiment 3 of the present invention;

FIG. 5 is a schematic diagram of random access channel resource configuration information in a method for configuring random access channel resources provided in the embodiment 5 of the present invention;

FIG. 6 is a schematic diagram of random access channel resource configuration information in a method for configuring random access channel resources provided in the embodiment 6 of the present invention;

FIG. 7 is a schematic diagram of random access channel resource configuration information in a method for configuring random access channel resources provided in the embodiment 7 of the present invention;

FIG. 8 is a schematic diagram of distribution of PRACH starting resources within 1 Frame in the embodiment 8 of the present invention;

FIG. 9 is a schematic diagram of random access channel resource configuration information in a method for configuring random access channel resources provided in the embodiment 10 of the present invention;

FIG. 10 is a schematic diagram of allocation of PRACH starting resources allocated within a plurality of Frames in the embodiment 11 of the present invention;

FIG. 11 is a schematic diagram of random access channel resource configuration information in a method for configuring random access channel resources provided in the embodiment 12 of the present invention;

FIG. 12 is a schematic diagram of PRACH resources configuration within a Frame 0 in the embodiment 12 of the present invention;

FIG. 13 is a schematic diagram of PRACH resources configuration within each Frame in the embodiment 13 of the present invention; and

FIG. 14 is a schematic diagram of PRACH resources configuration within a Frame 0 in the embodiment 13 of the present invention;

Preferred Embodiments of the Present Invention

The embodiments of the present invention will be described in detail in conjunction with the accompanying drawings. It should be noted that the embodiments in the present invention and the features in the embodiments can be combined with each other arbitrarily in the case of no conflict.
An embodiment of the present invention provides a method for configuring random access channel resources, first nodes send random access channel resource configuration information to second nodes, and the random access channel resource configuration information is indicated by one or a plurality of pieces of random access channel configuration information.
Configuration information of first resources is included at least in the random access channel configuration information, the first resources are one of the following:

resources used for sending random access signalings and allocated to the second nodes; and

starting resources used for sending the random access signalings and allocated to the second nodes.

In the embodiment of the present invention, descriptions will be made through an example of taking the first resources as PRACH resources or PRACH starting resources.

Embodiment 1 of the present invention

The embodiment of the present invention provides a method for configuring random access channel resources, which includes:

(1) The random access channel resource configuration information is indicated by one piece of random access channel configuration information, and the prach-ConfigIndex is at least contained in the random access channel configuration information.

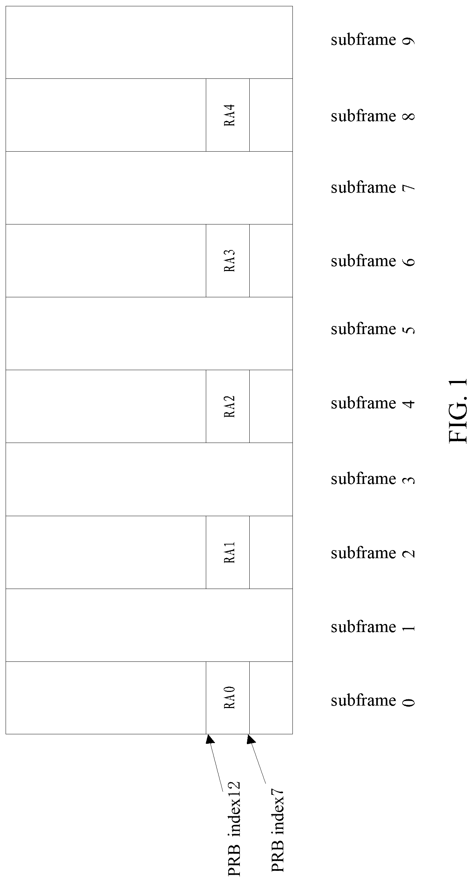

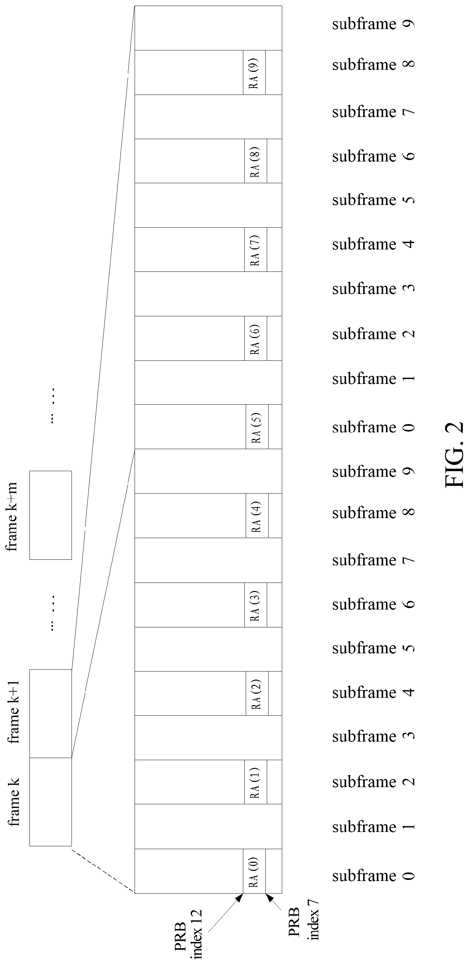

Wherein, the prach-ConfigIndex is used to describe allocated time domain position information of the PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame, the second nodes, by decoding the prach-ConfigIndex information sent by the first nodes, learn that the described PRACH starting resources occupy subframes 0, 2, 4, 6 and 8 in the time domain within 1 Frame, and there are starting resources of 5 PRACHs in total, as shown in FIG. 1;
further, the second nodes may be one or a plurality of terminals or one or a plurality of terminal groups;
wherein, prach-FreqOffset is used to indicate frequency domain offset information of the PRACH starting resources described by the prach-ConfigIndex in the frequency domain. In the embodiment of the present invention, the prach-FreqOffset equals to 7 and is configured by the system by default, that is, the first PRB index occupied by the described PRACH starting resources in the frequency domain within 1 Frame is a PRB Index7, as shown in FIG. 1.
In the embodiment of the present invention, the PRACH starting resources allocated in a plurality of Frames are sequenced, as shown in FIG. 2, indexes of the PRACH starting resources in a Frame k are RA(0) ~ RA(4), indexes of the PRACH starting resources in a Frame k+1 are RA(5) ~ RA(9), and so on, and a PRACH starting resource set PRACHSet is formed.
Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The PRACHSet is divided into one or a plurality of random access channel resource subsets, each subset can support one type or more types of the second nodes sending random access sequences;
wherein, the second nodes may be sorted according to one of the following principles:

sorted according to different coverage improvement levels required to be supported by the second nodes;

allocated according to the number of repeated transmissions of the random access sequences required to be supported by the second nodes; and

repeat times of the Physical Broadcast Channel (PBCH) used when the PBCH is decoded successfully by the second nodes.

In the embodiment of the present invention, the second nodes are divided into two types (Type_1 and Type_2) according to the coverage improvement levels required to be supported and the PRACHSet is divided into two subsets (a subset 1 and a subset 2), the indexes of the PRACH starting resources occupied by each subset is configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.

Wherein, the first nodes illustrated are one of the following:

a Macrocell, a Microcell, a Picocell, a Femtocell (also called a home eNode B), a low power node (LPN), a Relay and a Small Cell.

The indexes of the PRACH starting resources in the subsets may be chosen based on the following formula:

$$Subset\_i = \{RAIdx \mid \mathrm{mod}\,(RAIdx, Interval_{\mathrm{Subset}\_i}) = b_{\mathrm{Subset}\_i}, \ 0 \le b_{\mathrm{Subset}\_i} \le Interval_{\mathrm{Subset}\_i} - 1\},$$

wherein, RAIdx is an index of the PRACH starting resources in the PRACHSet, the values thereof are RA(0), RA(1), ...;

$Interval_{Subset\_i}$ is a spacing between time domain positions of the PRACH starting resources in a subset i;

$b_{Subset\_i}$ is an index offset of the PRACH starting resources in the subset i; and

$Subset\_i$ is an index of the PRACH starting resources of the subset i.

In the embodiment of the present invention, it is assumed that $Interval_{Subset\_1}=2$, $Interval_{Subset-2}=2$, $b_{Subset\_1}=0$ and $b_{Subset\_2}=1$, then the indexes of the PRACH starting resources of the subset 1 are RA(0), RA(2), RA(4), ...; the indexes of the PRACH starting resources of the subset 2 are RA(1), RA(3), RA(5),..., wherein information of the $Interval_{Subset\_1}=2$, $Interval_{Subset\_2}=2$, $b_{Subset\_1}=0$ and $b_{Subset\_2}=1$ is configured by the system or sent by the first nodes;

(3) When the second nodes send the random access sequences, the indexes of the occupied starting resources may be obtained in the following manners:

the indexes of the PRACH starting resources of each subset are resequenced and then determined based on the following formula:

$$Type\_i\_Start' = \{RAIdx' \mid \mathrm{mod}(RAIdx', RACH\,Re\,pTime'_{\mathrm{Type}\_i}) = 0\},$$

wherein, RAIdx' is a resequenced index of the PRACH starting resources, the values thereof are RA'(0), RA'(1), ...;

$RACHRepTime'_{Type\_i}$ is the number of the PRACH starting resources included in the resources occupied by the random access signalings sent by the second nodes of a type i (Type_i); and

$Type\_i\_Start'$ is the index of the starting resources occupied when the second nodes of the type i (Type_i) send the random access sequences.

In the embodiment of the present invention, the indexes of the PRACH starting resources of the second nodes of the type 1 (Type_1) are RA(0), RA(2), RA(4), ..., and it is assumed that the time domain length of the random access sequences sent by the second nodes of the type 1 is 4 subframes and $RACHRepTime'_{Type\_i}=2$, then the indexes of the starting resources when the second nodes of the type 1 (Type_1) send the random access sequences are RA'(0), RA'(2), RA'(4), ..., i.e., the indexes RA(0), RA(4), RA(8), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the types of the second nodes of the random access response information may be carried in the same random access response signaling, and they are configured by the system or sent to the second nodes by the first nodes.

In the embodiment of the present invention, it is assumed that two second nodes, such as a User Equipment 1 (UE1) and a User Equipment 2 (UE2) are carried in the random access response signalings and the UE1 and UE2 belong to the same type, that is, the coverage improvement levels of the UE1 and UE2 are same or the repeat times of transmission of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 2 of the present invention

The embodiment of the present invention provides a configuration for random access channel resources, the procedure of accomplishing the MTC UE access by using the method is as follows, which includes:

(1) Random access channel resource configuration information is indicated by one piece of random access channel configuration information, prach-ConfigIndex and prach-FreqOffset are at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length, as shown in Table 1, wherein, "PreambleFormat" represents a random access sequence format; "System frame number" represents a system frame number (Even represents an even frame, and Any represents any frame); and "Subframe number" represents a subframe number.

Table 1: prach-ConfigIndex resource mapping table

| prach-ConfigIndex | Preamble Format | System frame number | Subframe number |
| --- | --- | --- | --- |
| 0 | 0 | Even | 1 |
| 1 | 0 | Even | 4 |
| 2 | 0 | Even | 7 |
| 3 | 0 | Any | 1 |
| 4 | 0 | Any | 4 |
| 5 | 0 | Any | 7 |
| 6 | 0 | Any | 1, 6 |
| 7 | 0 | Any | 2, 7 |
| 8 | 0 | Any | 3, 8 |
| 9 | 0 | Any | 1, 4, 7 |
| 10 | 0 | Any | 2, 5, 8 |
| 11 | 0 | Any | 3, 6, 9 |
| 12 | 0 | Any | 0, 2, 4, 6, 8 |
| 13 | 0 | Any | 1, 3, 5, 7, 9 |
| 14 | 0 | Any | 0, 1, 2, 3, 4, 5, 6, 7, 8, 9 |
| 15 | 0 | Even | 9 |

In the embodiment of the present invention, if prach-ConfigIndex=12, then PreambleFormat="0", indicating that the random access sequence format is PreambleFormat 0; System frame number="Any", indicating that PRACH starting resources exist in any frame; Subframe number="0, 2, 4, 6, 8", indicating that the PRACH starting resources exist in the subframe 0, subframe 2, subframe 4, subframe 6 and subframe 8, since there are starting resources of only one RPACH at most in each subframe by default, there are starting resources of 5 PRACHs in one Frame in the embodiment of the present invention, as shown in FIG. 1.

Further, the second nodes may be one or a plurality of terminals or one or a plurality of terminal groups.

Wherein, the prach-FreqOffset is used to indicate frequency domain offset information of the PRACH starting resources described by the prach-ConfigIndex in the frequency domain. In the embodiment of the present invention, prach-FreqOffset=7, that is, the first PRB index occupied by the described PRACH starting resources in the frequency domain within 1 Frame is a PRB Index7, as shown in FIG. 1.

In the embodiment of the present invention, the PRACH starting resources allocated in a plurality of Frames are sequenced, as shown in FIG. 2, indexes of the PRACH starting resources in a Frame k are RA(0) ~ RA(4), indexes of the PRACH starting resources in a Frame k+1 are RA(5) ~ RA(9), and so on, and a PRACH starting resource set PRACHSet is formed.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The PRACHSet is divided into one or a plurality of random access channel resource subsets, each subset can support one type or more types of the second nodes sending random access sequences;
wherein, the second nodes may be sorted according to one of the following principles:

sorted according to different coverage improvement levels required to be supported by the second nodes;

allocated according to the number of repeated transmissions of the random access sequences required to be supported by the second nodes; and

repeat times of the Physical Broadcast Channel (PBCH) used when the PBCH is decoded successfully by the second nodes;

in the embodiment of the present invention, the second nodes are divided into two types (Type_1 and Type_2) according to different numbers of repeated transmissions of the random access sequences required to be supported and the PRACHSet is divided into two subsets (a subset 1 and a subset 2), the indexes of the PRACH starting resources occupied by each subset are configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.

In the embodiment of the present invention, the random access sequences sent by the second node of the Type_1 occupy 2 subframes, and the random access sequences sent by the second node of the Type_2 occupy 4 subframes; wherein, the first nodes illustrated are one of the following:
a Macrocell, a Microcell, a Picocell, a Femtocell (also called a home eNode B), a low power node (LPN), a Relay and a Small Cell.

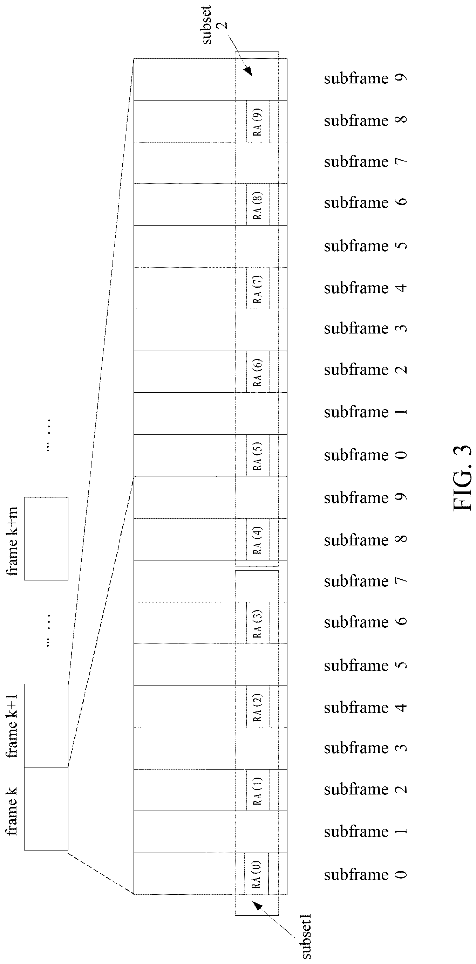

In the embodiment of the present invention, the indexes of the PRACH starting resources occupied by the subset 1 are RA(0) ~ RA(3), RA(10) ~ RA(13), RA(20) ~ RA(23), ..., the indexes of the PRACH starting resources occupied by the subset 2 are RA(4) ~ RA(9), RA(14) ~ RA(19), RA(24) ~ RA(29), ..., as shown in FIG. 3.

(3) When the second nodes send the random access sequences, the indexes of the occupied starting resources may be obtained in the following manners:
in the embodiment of the present invention, the indexes of the PRACH starting resources occupied when the second nodes of the Type_1 send the random access sequences on the subset 1 may be chosen from the RA(0) ~ RA(3), RA(10) ~ RA(13), RA(20) ~ RA(23), ...; the indexes of the PRACH starting resources occupied when the second nodes of the Type_2 send the random access sequences on the subset 2 may be chosen from the RA(4), RA(6), RA(8), RA(14), RA(16), RA(18), RA(24), RA(26), RA(28), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and they are configured by the system or sent to the second nodes by the first nodes.
In the embodiment of the present invention, it is assumed that two second nodes, such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.
In addition to the embodiment of the present invention, the UE1 and UE2 may also belong to different types, but it is required that the system predefine types of the second nodes which can send the random access response information in the same random access response signaling, and the UE1 and UE2 belong to the types.
The above types of the second nodes may be varied with different environments where the UE is located, and they are not constant after being set, the concept of the type in the embodiment of the present invention is a concept similar to a set, when the corresponding division principle is met, the second nodes are assigned to the corresponding type.

Embodiment 3 of the present invention

The embodiment of the present invention provides a method for configuring random access channel resources, the procedure of accomplishing the MTC UE access by using the method is as follows, which includes:

(1) Random access channel resource configuration information is indicated by one piece of random access channel configuration information, prach-FreqOffset is at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame and the prach-ConfigIndex information is configured by the system by default, for example, the described PRACH starting resources occupy subframes 0, 2, 4, 6 and 8 in the time domain within 1 Frame, and there are starting resources of 5 PRACHs in total, as shown in FIG. 1;
further, the second nodes may be one or a plurality of terminals or one or a plurality of terminal groups.
Wherein, the prach-FreqOffset is used to indicate frequency domain offset information of the PRACH starting resources described by the prach-ConfigIndex in the frequency domain. In the embodiment of the present invention, prach-FreqOffset=7, that is, the first PRB index occupied by the described PRACH starting resources in the frequency domain within 1 Frame is a PRB Index7, as shown in FIG. 1.
In the embodiment of the present invention, the PRACH starting resources allocated in a plurality of Frames are sequenced, as shown in FIG. 2, indexes of the PRACH starting resources in a Frame k are RA(0) ~ RA(4), indexes of the PRACH starting resources in a Frame k+1 are RA(5) ~ RA(9), and so on.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The random access channel resources are divided into one or a plurality of random access channel resource subsets, each subset can support one type or more types of the second nodes sending random access sequences; wherein, the second nodes may be sorted according to one of the following principles:

sorted according to different coverage enahcnement levels required to be supported by the second nodes;

allocated according to the number of repeated transmissions of the random access sequences required to be supported by the second nodes; and

repeat times of the PBCH channel used accumulatively when the PBCH is decoded successfully by the second nodes.

In the embodiment of the present invention, the second nodes are divided into four types (Type_1, Type_2, Type_3 and Type_4) according to different repeat times of the PBCH channel used accumulatively when the PBCH is decoded successfully by the second nodes and the random access channel resources are divided into two subsets (a subset 1 and a subset 2), the indexes of the PRACH starting resources occupied by each subset are configured by the system or sent by the first nodes. Each subset supports two types of the second nodes sending the random access sequences, for example, the second nodes of the Type_1 and Type_2 send the random access sequences on the subset 1, and the second nodes of the Type_3 and Type_4 send the random access sequences on the subset 2.

In the embodiment of the present invention, the random access sequences sent by the second nodes of the Type_1 occupy 2 subframes, the random access sequences sent by the second nodes of the Type_2 occupy 6 subframes; the random access sequences sent by the second nodes of the Type_3 occupy 4 subframes, and the random access sequences sent by the second nodes of the Type_4 occupy 8 subframes.

Wherein, the first nodes illustrated are one of the following:

a Macrocell, a Microcell, a Picocell, a Femtocell (also called a home eNode B), a low power node (LPN), a Relay and a Small Cell.

In the embodiment of the present invention, the indexes of the PRACH starting resources occupied by the subset 1 are RA(0) ~ RA(3), RA(10) ~ RA(13), RA(20) ~ RA(23), ..., the indexes of the PRACH starting resources occupied by the subset 2 are RA(4) ~ RA(9), RA(14) ~ RA(19), RA(24) ~ RA(29), ..., as shown in FIG. 3.

(3) When the second nodes send the random access sequences, the indexes of the occupied starting resources may be obtained in the following manners:

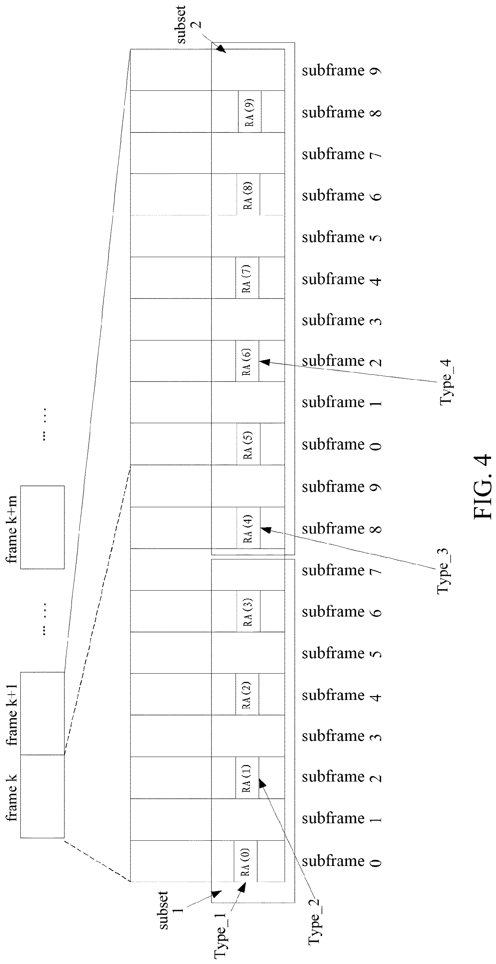

in the embodiment of the present invention, the indexes of the PRACH starting resources occupied when the second nodes of the Type_1 send the random access sequences on the subset 1 are chosen from the RA(0), RA(10), RA(20), ...; the indexes of the PRACH starting resources occupied when the second nodes of the Type_2 send the random access sequences on the subset 1 may be chosen from the RA(1), RA(11), RA(21), ...; the indexes of the PRACH starting resources occupied when the second nodes of the Type_3 send the random access sequences on the subset 2 may be chosen from the RA(4), RA(14), RA(24), ...; and the indexes of the PRACH starting resources occupied when the second nodes of the Type_4 send the random access sequences on the subset 2 may be chosen from the RA(6), RA(16), RA(26), ..., as shown in FIG. 4.

(4) The second nodes send the random access signalings on the allocated random access resources;

(5) After the first nodes receive the random access signalings sent by the second nodes, the first nodes send random access response signalings to the second nodes to respond to the random access signalings sent by the second nodes;

wherein, the random access response information of one or a plurality of the second nodes is carried in the random access response signalings; and the type of the second nodes of the random access response information may be carried in the same random access response signaling, and they are configured by the system or sent to the second nodes by the first nodes.

In the embodiment of the present invention, it is assumed that two second nodes, such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 4 of the present invention

The embodiment of the present invention provides a configuration for random access channel resources, the procedure of accomplishing the MTC UE access by using the method is as follows, which includes:

(1) Random access channel resource configuration information is indicated by one piece of random access channel configuration information, prach-ConfigIndex and prach-FreqOffset are at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame, the second nodes, by decoding the prach-ConfigIndex information sent by the first nodes, learn that the described PRACH starting resources occupy subframes 0, 2, 4, 6 and 8 in the time domain within 1 Frame, and there are starting resources of 5 PRACHs in total, as shown in FIG. 1.

Further, the second nodes may be one or a plurality of terminals or one or a plurality of terminal groups.

Wherein, the prach-FreqOffset is used to indicate frequency domain offset information of the PRACH starting resources described by the prach-ConfigIndex in the frequency domain. In the embodiment of the present invention, prach-FreqOffset=7, that is, the first PRB index occupied by the described PRACH starting resources in the frequency domain within 1 Frame is a PRB Index7, as shown in FIG. 1.

In the embodiment of the present invention, the PRACH starting resources allocated in a plurality of Frames are sequenced, as shown in FIG. 2, indexes of the PRACH starting resources in a Frame k are the RA(0) ~ RA(4), indexes of the PRACH starting resources in a Frame k+1 are the RA(5) ~ RA(9), and so on.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The random access channel resources are divided into one or a plurality of random access channel resource subsets, each subset can support one type or more types of the second nodes sending the random access sequences; wherein, the second nodes may be sorted according to one of the following principles:

sorted according to different repeat times of a Master Information Block (MIB) message when the MIB message is decoded successfully by the second nodes;

sorted according to different repeat times of a System Information Block (SIB) message when the SIB message is decoded successfully by the second nodes; and

sorted according to different repeat times of the MIB message when the PBCH is decoded successfully by the second nodes.

In the embodiment of the present invention, the second nodes are sorted according to the number of repetitions repeat times of the Master Information Block (MIB) message when the MIB message is decoded successfully, for example, they are divided into four types (Type_1, Type_2, Type_3 and Type_4), and the random access channel resources are divided into two subsets (a subset 1 and a subset 2), the indexes of the PRACH starting resources occupied by each subset are configured by the system or sent by the first nodes. Each subset supports two types of the second nodes sending the random access sequences, for example, the second nodes of the Type_1 and Type_2 send the random access sequences on the subset 1, and the second nodes of the Type_3 and Type_4 send the random access sequences on the subset 2. The indexes of the random access sequences used by the two types of the second nodes to which the same subset is allocated are different; wherein, the first nodes illustrated are one of the following:

a Macrocell, a Microcell, a Picocell, a Femtocell (also called a home eNode B), a low power node (LPN), a Relay and a Small Cell;
the indexes of the PRACH starting resources in the subsets may be chosen based on the following formula:

$$Subset\_i = \{RAIdx \mid \mathrm{mod}(RAIdx, Interval_{\mathrm{Subset}\_i}) = b_{\mathrm{Subset}\_i}, \quad 0 \le b_{\mathrm{Subset}\_i} \le Interval_{\mathrm{Subset}\_i} - 1\},$$

wherein, RAIdx is an index of the PRACH starting resources, the values thereof are RA(0), RA(1), ...;
$Interval_{Subset\_i}$ is a spacing between time domain positions of the PRACH starting resources in a subset i;
$b_{Subset\_i}$ is an index offset of the PRACH starting resources in the subset i; and
Subset_i is an index of the PRACH starting resources in the subset i;
in the embodiment of the present invention, it is assumed that $Interval_{Subset\_1}$=2, $Interval_{Subset\_2}$=2, $b_{Subset\_1}$=0 and $b_{Subset\_2}$=1, then the indexes of the PRACH starting resources in the subset 1 are the RA(0), RA(2), RA(4), ...; the indexes of the PRACH starting resources in the subset 2 are the RA(1), RA(3), RA(5),...; wherein information of the $Interval_{Subset\_1}$=2, $Interval_{Subset\_2}$=2, $b_{Subset\_1}$=0 and $b_{Subset\_2}$=1 is configured by the system or sent by the first nodes;

(3) When the second nodes send the random access sequences, the indexes of the occupied starting resources may be obtained in the following manners:

the indexes of the PRACH starting resources in each subset are resequenced and then determined based on the following formula:

$$Type\_j\_Start_{subset\_i} = \{RAIdx' \mid \mathrm{mod}(RAIdx', RACH\,RepTime^{Tyep-j}_{subset\_i}) = 0\},$$

wherein, RAIdx' is a resequenced index of the PRACH starting resources in each subset, the values thereof are RA'(0), RA'(1), ...;

$RACH\,RepTime^{Tyep-j}_{subset\_i}$ is the number of the PRACH starting resources included in the resources occupied by the random access signalings sent by the second nodes of a type j (Type_j); and

Type_j_Start$_{subset\_i}$ is the index of the starting resources occupied when the second nodes of the type j (Type_j) send the random access sequences.

In the embodiment of the present invention, the indexes of the PRACH starting resources of the second nodes of the Type_1 and Type_2 are the RA(0), RA(2), RA(4), ..., and it is assumed that the time domain length of the random access sequences sent by the Type_1 is 2 subframes and $RACH\,Re\,pTime_{subset\_1}^{Tyep\_1}=1,$ and the time domain length of the random access sequences sent by the Type_2 is 4 subframes and $RACH\,Re\,pTime_{subset\_1}^{Tyep\_2}=2,$ then the indexes of the starting resources when the Type_1 sends the random access sequences are RA'(0), RA'(1), RA'(2), ..., i.e., indexes RA(0), RA(2), RA(4), ...; and the indexes of the starting resources when the Type_2 sends the random access sequences are RA'(0), RA'(2), RA'(4), ..., i.e., indexes RA(0), RA(4), RA(8), ....

In the embodiment of the present invention, the indexes of the PRACH starting resources of the second nodes of the Type_3 and Type_4 are the RA(1), RA(3), RA(5), ..., and it is assumed that the time domain length of the random access sequences sent by the Type_3 is 2 subframes and $RACH\,Re\,pTime_{subset\_2}^{Tyep\_3}=1,$ and the time domain length of the random access sequences sent by the Type_4 is 4 subframes and $RACH\,Re\,pTime_{subset\_2}^{Tyep\_4}=2,$ then the indexes of the starting resources when the Type_3 sends the random access sequences are RA'(0), RA'(1), RA'(2), ..., i.e., indexes RA(1), RA(3), RA(5), ...; and the indexes of the starting resources when the Type_4 sends the random access sequences are RA'(0), RA'(2), RA'(4), ..., i.e., indexes RA(1), RA(5), RA(7), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 5 of the present invention

The embodiment of the present invention provides a configuration for random access channel resources, the procedure of accomplishing the MTC UE access by using the method is as follows, which includes:

(1) Random access channel resource configuration information is indicated by one piece of random access channel configuration information, prach-ConfigIndex and prach-FreqOffset are at least contained in the random access channel configuration information.

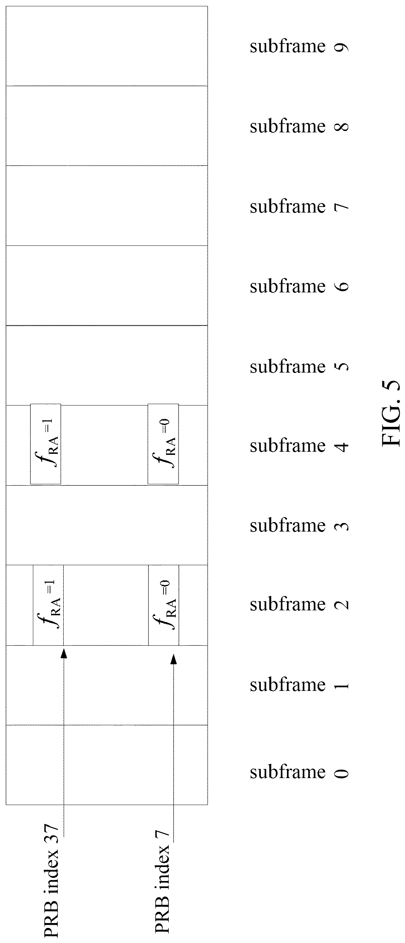

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame, the second nodes, by decoding the prach-ConfigIndex information sent by the first nodes, learn that the described PRACH starting resources occupy subframes 2 and 4 in the time domain within 1 Frame, and there are starting resources of 4 PRACHs in total, as shown in FIG. 5.

Wherein, the prach-FreqOffset is used to indicate the first PRB index occupied by the PRACH starting resources described by the prach-ConfigIndex in the frequency domain.

Further, the second nodes may be one or a plurality of terminals or one or a plurality of terminal groups.

In the embodiment of the present invention, the minimum PRB index $n_{\mathrm{PRB}}^{\mathrm{RA}}$ of the starting resources of each PRACH in the frequency domain is obtained based on the following formula:

$$
n_{\mathrm{PRB}}^{\mathrm{RA}} =
\begin{cases}
n_{\mathrm{PRB\ offset}}^{\mathrm{RA}} + 6\left\lfloor \dfrac{f_{\mathrm{RA}}}{2} \right\rfloor, & \text{if } f_{\mathrm{RA}} \bmod 2 = 0 \\[2ex]
N_{\mathrm{RB}}^{\mathrm{UL}} - 6 - n_{\mathrm{PRB\ offset}}^{\mathrm{RA}} - 6\left\lfloor \dfrac{f_{\mathrm{RA}}}{2} \right\rfloor, & \text{otherwise}
\end{cases}
$$

,

wherein, the value of $n_{\mathrm{PRB\ offset}}^{\mathrm{RA}}$ is described by the prach-FreqOffset, e.g., $n_{\mathrm{PRB\ offset}}^{\mathrm{RA}} = 7$; $N_{\mathrm{RB}}^{\mathrm{UL}}$ is the magnitude of the uplink system bandwidth with the PRB as a unit, e.g., $N_{\mathrm{RB}}^{\mathrm{UL}} = 50$; and

$f_{\mathrm{RA}}$ is an index of the starting resources of the PRACHs in the same subframe, e.g., $f_{\mathrm{RA}}$=0~1;
a schematic diagram of the PRACH starting resources distribution within the subframe 2 and subframe 4 is as shown in FIG. 5.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The random access channel resources are divided into one or a plurality of random access channel resource subsets, each subset can support one type or more types of the second nodes sending random access sequences; wherein, the second nodes may be sorted according to one of the following principles:

sorted according to different repeat times of a Master Information Block (MIB) message when the MIB message is decoded successfully by the second nodes;

sorted according to different repeat times of a System Information Block (SIB) message when the SIB message is decoded successfully by the second nodes; and

sorted according to different repeat times of the MIB message when the PBCH is decoded successfully by the second nodes.

In the embodiment of the present invention, the second nodes are sorted according to different repeat times of the System Information Block (SIB) message when the SIB message is decoded successfully, for example, they are divided into two types (Type_1 and Type_2) and the random access channel resources are divided into two subsets (a subset 1 and a subset 2), the indexes of the PRACH starting resources occupied by each subset are configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.

Wherein, the first nodes illustrated are one of the following:

a Macrocell, a Microcell, a Picocell, a Femtocell (also called a home eNode B), a low power node (LPN), a Relay and a Small Cell.

In the embodiment of the present invention, the index of the PRACH starting resources in the subset 1 is $f_{RA}=0$ in each Frame; the index of the PRACH starting resources in the subset 2 is $f_{RA}=1$ in each Frame.

(3) When the second nodes send the random access sequences, the indexes of the occupied starting resources may be obtained in the following manners:

the indexes of the PRACH starting resources allocated to each type of the second nodes are resequenced and then determined based on the following formula:

$$Type\_i\_Start' = \{RAIdx' \mid mod(RAIdx', RACHRepTime'_{Type\_i}) = 0\},$$

wherein, $RAIdx'$ is a resequenced index of the PRACH starting resources in each subset, the values thereof are RA'(0), RA'(1), ...;

$RACHRepTime'_{Type\_i}$ is the number of the PRACH starting resources included in the resources occupied by the random access signalings sent by the second nodes of the type i (Type_i); and

$Type\_i\_Start'$ is the index of the starting resources occupied when the second nodes of the type i (Type_i) send the random access sequences.

In the embodiment of the present invention, the indexes of the PRACH starting resources of the second nodes of the type 1 (Type_1) are $f_{RA}=0$ of the subframe 2 and $f_{RA}=0$ of the subframe 4 in the Frame and are resequenced as the RA'(0), RA'(1), RA'(2), ..., and it is assumed that the time domain length of the random access sequences sent by the Type_1 is 4 subframes and $RACHRepTime'_{Type\_i}=2$, then the indexes of the starting resources when the Type_1 sends the random access sequences are the RA'(0), RA'(2), RA'(4), ...; the indexes of the PRACH starting resources of the second nodes of the type 2 (Type_2) are $f_{RA}=1$ of the subframe 2 and subframe 4 in the Frame and are resequenced as the RA'(0), RA'(1), RA'(2), ..., and it is assumed that the time domain length of the random access sequences sent by the Type_2 is 2 subframes and $RACHRepTime'_{Type\_2}=1$, then the indexes of the starting resources when the Type_2 sends the random access sequences are the RA'(0), RA'(1), RA'(2), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 6 of the present invention

The embodiment of the present invention provides a configuration for random access channel resources, the procedure of accomplishing the MTC UE access by using the method is as follows, which includes:

(1) Random access channel resource configuration information is indicated by one piece of random access channel configuration information, prach-ConfigIndex and prach-FreqOffset are at least contained in the random access channel configuration information.

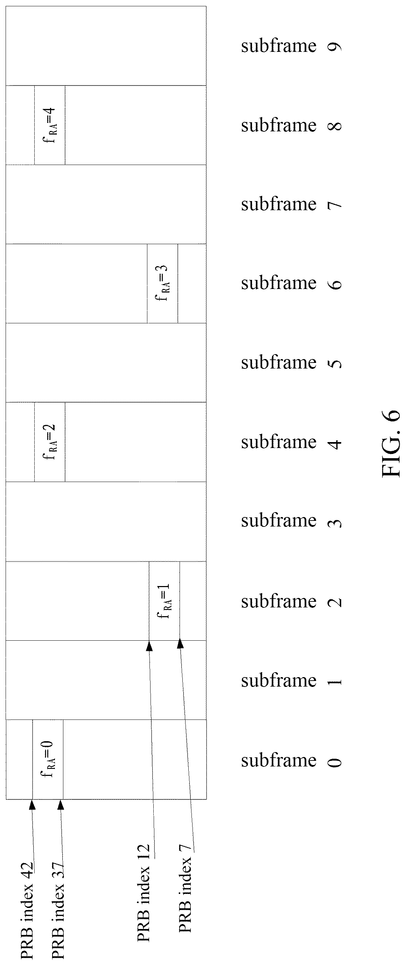

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame, the second nodes, by decoding the prach-ConfigIndex information sent by the first nodes, learn that the described PRACH starting resources occupy subframes 0, 2, 4, 6 and 8 in the time domain within 1 Frame, as shown in FIG. 6;

wherein, the prach-FreqOffset is used to indicate the first PRB index occupied by the PRACH starting resources described by the prach-ConfigIndex in the frequency domain;

further, the second nodes may be one or a plurality of terminals or one or a plurality of terminal groups;

in the embodiment of the present invention, the minimum PRB index $n_{\text{PRB}}^{\text{RA}}$ of the starting resources of each PRACH in the frequency domain is obtained based on the following formula:

$$
n_{\text{PRB}}^{\text{RA}} = \begin{cases} n_{\text{PRB offset}}^{\text{RA}} + 6\left\lfloor \dfrac{f_{\text{RA}}}{2} \right\rfloor, & \text{if } f_{\text{RA}} \bmod 2 = 0 \\[3mm] N_{\text{RB}}^{\text{UL}} - 6 - n_{\text{PRB offset}}^{\text{RA}} - 6\left\lfloor \dfrac{f_{\text{RA}}}{2} \right\rfloor, & \text{otherwise} \end{cases}
$$
,

wherein, the value of $n_{\text{PRB offset}}^{\text{RA}}$ is described by the prach-FreqOffset, e.g., $n_{\text{PRB offset}}^{\text{RA}} = 7$; $N_{\text{RB}}^{\text{UL}}$ is the magnitude of the uplink system bandwidth with the PRB as a unit, e.g., $N_{\text{RB}}^{\text{UL}} = 50$; and

$f_{\text{RA}}$ is an index of the starting resources of different PRACHs in 1 Frame, e.g., $f_{\text{RA}} = 0 \sim 4$;

a schematic diagram of the PRACH starting resources distribution within 1 Frame is as shown in FIG. 6.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The random access channel resources are divided into one or a plurality of random access channel resource subsets, each subset can support one type or more types of the second nodes sending random access sequences; wherein, the second nodes may be sorted according to one of the following principles:

sorted according to different repeat times of a Master Information Block (MIB) message when the MIB message is decoded successfully by the second nodes;

sorted according to different repeat times of a System Information Block (SIB) message when the SIB message is decoded successfully by the second nodes; and

sorted according to different repeat times of the MIB message when the PBCH is decoded successfully by the second nodes.

In the embodiment of the present invention, the second nodes are sorted according to different repeat times of the MIB message when the PBCH is decoded successfully, for example, they are divided into two types (Type_1 and Type_2), and the random access channel resources are divided into two subsets (a subset 1 and a subset 2), the indexes occupied by each subset are configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.

Wherein, the first nodes illustrated are one of the following:

a Macrocell, a Microcell, a Picocell, a Femtocell (also called a home eNode B), a low power node (LPN), a Relay and a Small Cell.

In the embodiment of the present invention, the indexes of the PRACH starting resources in the subset 1 are $f_{RA}$=0, 1, 2 in each Frame; the indexes of the PRACH starting resources in the subset 2 are $f_{RA}$=3, 4 in each Frame.

(3) When the second nodes send the random access sequences, the indexes of the occupied starting resources may be obtained in the following manners:

the PRACH starting resources allocated to each type of the second nodes are resequenced and then determined based on the following formula:

$$\mathrm{Type}\_i\_Start' = \{\mathrm{RAIdx}' \mid \mathrm{mod}(\mathrm{RAIdx}', \mathrm{RACHRepTime}'_{\mathrm{Type}\_i}) = 0\},$$

wherein, RAIdx' is a resequenced index of the PRACH starting resources allocated to the second nodes of the Type_i, the values thereof are RA'(0), RA'(1), RA'(2), ...;

RACHRepTime'$_{\mathrm{Type}\_i}$ is the number of the PRACH starting resources included in the resources occupied by the random access signalings sent by the second nodes of the type i (Type_i); and

Type_i_Start' is the index of the starting resources occupied when the second nodes of the type i (Type_i) send the random access sequences.

In the embodiment of the present invention, the indexes of the PRACH starting resources of the second nodes of the type 1 (Type_1) are RA'(0), RA'(1), RA'(2), ..., and it is assumed that the time domain length of the random access sequences sent by the second nodes of the Type_1 is 6 subframes and RACHRepTime'$_{\mathrm{Type}\_i}$=3, then the indexes of the starting resources when the second nodes of the type 1 (Type_1) send the random access sequences are RA'(0), RA'(3), RA'(6), ...; the indexes of the PRACH starting resources of the second nodes of the type 2 (Type_2) are RA'(0), RA'(1), RA'(2), ..., and it is assumed that the time domain length of the random access sequences sent by the second nodes of the Type_2 is 4 subframes and RACHRepTime'$_{\mathrm{Type}\_i}$=2, then the indexes of the starting resources when the second nodes of the type 1 (Type_1) send the random access sequences are RA'(0), RA'(2), RA'(4), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 7 of the present invention

The embodiment of the present invention provides a configuration for random access channel resources, the procedure of accomplishing the MTC UE access by using the method is as follows, which includes:

(1) Random access channel resource configuration information is indicated by one piece of random access channel configuration information, prach-ConfigIndex and prach-FreqOffset are at least contained in the random access channel configuration information.

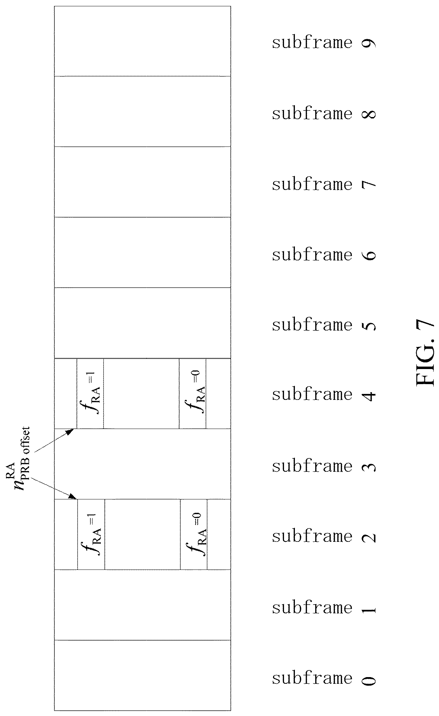

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame, the second nodes, by decoding the prach-ConfigIndex information sent by the first nodes, learn that the described PRACH starting resources occupy subframes 2 and 4 in the time domain within 1 Frame, and each subframe has two starting positions of the PRACH starting resources, as shown in FIG. 7.

Wherein, the prach-FreqOffset is used to indicate the first PRB index occupied by the PRACH starting resources described by the prach-ConfigIndex in the frequency domain.

Further, the second nodes may be one or a plurality of terminals or one or a plurality of terminal groups.

In the embodiment of the present invention, the minimum PRB index $n_{\mathrm{PRB}}^{\mathrm{RA}}$ of the starting resources of each PRACH in the frequency domain is obtained based on the following formula:

$$
n_{\mathrm{PRB}}^{\mathrm{RA}} = \begin{cases} n_{\mathrm{PRB\,offset}}^{\mathrm{RA}} + 6\left\lfloor \dfrac{f_{\mathrm{RA}}}{2} \right\rfloor, & \text{if } f_{\mathrm{RA}} \bmod 2 = 0 \\ N_{\mathrm{RB}}^{\mathrm{UL}} - 6 - n_{\mathrm{PRB\,offset}}^{\mathrm{RA}} - 6\left\lfloor \dfrac{f_{\mathrm{RA}}}{2} \right\rfloor, & \text{otherwise} \end{cases}
$$
,

wherein, the value of $n_{\mathrm{PRB\,offset}}^{\mathrm{RA}}$ is described by the prach-FreqOffset, e.g., $n_{\mathrm{PRB\,offset}}^{\mathrm{RA}} = 7$; $N_{\mathrm{RB}}^{\mathrm{UL}}$ is the magnitude of the uplink system bandwidth with the PRB as a unit, e.g., $N_{\mathrm{RB}}^{\mathrm{UL}} = 50$; and

$f_{\mathrm{RA}}$ is an index of the starting resources of different PRACHs in the same time domain position in the frequency domain, e.g., $f_{\mathrm{RA}}=0\sim1$;

a schematic diagram of the PRACH starting resources distribution within 1 Frame is as shown in FIG. 7.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The random access channel resources are divided into one or a plurality of random access channel resource subsets, each subset can support one type or more types of the second nodes sending random access sequences; wherein, the second nodes may be sorted according to one of the following principles:

sorted according to different coverage improvement levels required to be supported by the second nodes;

allocated according to different numbers of the repeated transmissions of the random access sequences required to be supported by the second nodes; and

the repeat times of the Physical Broadcast Channel (PBCH) used when the PBCH is decoded successfully by the second nodes.

In the embodiment of the present invention, the second nodes are divided into two types (Type_1 and Type_2) according to the different coverage improvement levels required to be supported, and the random access channel resources are divided into two subsets (a subset 1 and a subset 2), and each subset supports one type of the second nodes sending the random access sequences, for example, the second nodes of the Type_1 send the random access sequences on the subset 1, and the second nodes of the Type_2 send the random access sequences on the subset 2.

Wherein, the first nodes illustrated are one of the following:

a Macrocell, a Microcell, a Picocell, a Femtocell (also called a home eNode B), a low power node (LPN), a Relay and a Small Cell.

In the embodiment of the present invention, the indexes of the PRACH starting resources in the subset 1 are $f_{RA}$=0 of the Subframe 2 and $f_{RA}$=1 of the Subframe 4 in each Frame; the indexes of the PRACH starting resources in the subset 2 are $f_{RA}$=1 of the Subframe 2 and $f_{RA}$=0 of the Subframe 4 in each Frame.

(3) When the second nodes send the random access sequences, the indexes of the occupied starting resources may be obtained in the following manners:

the PRACH starting resources allocated to each type of the second nodes are resequenced and then determined based on the following formula:

$$Type\_i\_Start' = \{RAIdx' \mid \mathrm{mod}(RAIdx', RACH\,Re\,pTime'_{Type\_i}) = 0\},$$

wherein, RAIdx' is a resequenced index of the PRACH starting resources, the values thereof are RA'(0), RA'(1), RA'(2), ...;

RACHRepTime'$_{Type\_i}$ is the number of the PRACH starting resources included in the resources occupied by the random access signalings sent by the second nodes of the type i (Type_i); and

Type_i_Start' is the index of the starting resources occupied when the second nodes of the type i (Type_i) send the random access sequences.

In the embodiment of the present invention, the indexes of the PRACH starting resources of the second nodes of the type 1 (Type_1) are RA'(0), RA'(1), RA'(2), ..., and it is assumed that the time domain length of the random access sequences sent by the second nodes of the Type_1 is 4 subframes and RACHRepTime'$_{Type\_1}$=2, then the indexes of the starting resources when the second nodes of the type 1 (Type_1) send the random access sequences are RA'(0), RA'(2), RA'(4), ...; the indexes of the PRACH starting resources of the second nodes of the type 2 (Type_2) are RA'(0), RA'(1), RA'(2), ..., and it is assumed that the time domain length of the random access sequences sent by the second nodes of the Type_2 is 2 subframes and RACHRepTime'$_{Type\_1}$=1, then the indexes of the starting resources when the second nodes of the type 2 (Type_2) send the random access sequences are RA'(0), RA'(1), RA'(2), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

In addition to the embodiment of the present invention, in the step (1), the minimum PRB index $n_{\mathrm{PRB}}^{\mathrm{RA}}$ of the starting resources of each PRACH in the frequency domain may also be calculated and obtained based on the following formula:

$$n_{\mathrm{PRB}}^{\mathrm{RA}} = n_{\mathrm{PRB\ offset}}^{\mathrm{RA}} + \left(6 + \Delta n_{\mathrm{PRB\ offset}}^{\mathrm{RA}}\right) f_{\mathrm{RA}},$$

wherein, the value of $n_{\mathrm{PRB\ offset}}^{\mathrm{RA}}$ is described by the prach-FreqOffset, e.g., $n_{\mathrm{PRB\ offset}}^{\mathrm{RA}} = 7$;

$N_{\mathrm{RB}}^{\mathrm{UL}}$ is the magnitude of the uplink system bandwidth with the PRB as a unit, e.g., $N_{\mathrm{RB}}^{\mathrm{UL}} = 50$;

$f_{\mathrm{RA}}$ is an index of the starting resources of different PRACHs in the same time domain position in the frequency domain; $f_{\mathrm{RA}} = 0 \sim 1$; and

$\Delta n_{\mathrm{PRB\ offset}}^{\mathrm{RA}}$ is a spacing between the starting resources of different PRACHs in frequency positions and it is notified by random access channel configuration signalings.

Embodiment 8 of the present invention

The embodiment of the present invention provides a configuration for random access channel resources, the procedure of accomplishing the MTC UE access by using the method is as follows, which includes:

(1) Random access channel resource configuration information is indicated by a plurality of pieces of random access channel configuration information, prach-ConfigIndex and prach-FreqOffset are at least contained in the random access channel configuration information.

In the embodiment of the present invention, it is assumed that the random access channel resource configuration information is indicated by two pieces of random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system.

Wherein, the prach-FreqOffset is used to indicate frequency domain offset information of the PRACH starting resources described by the prach-ConfigIndex in the frequency domain.

In the embodiment of the present invention, it is assumed that the predefined time domain length is 1 Frame; prach-ConfigIndex1 information in the indication of the first piece of PRACH configuration information indicates that the PRACH starting resources occupy the subframe 2 and the subframed 4 in the time domain within 1 Frame, and prach-FreqOffset1 describes that the first PRB index occupied by the PRACH starting resources in the frequency domain within 1 Frame is a PRB Index7;

prach-ConfigIndex2 information in the indication of the second piece of PRACH configuration information indicates that the PRACH starting resources occupy the subframe 2 and the subframe 4 in the time domain within 1 Frame, and prach-FreqOffset2 describes that the first PRB index occupied by the PRACH starting resources in the frequency domain within 1 Frame is a PRB Index37.

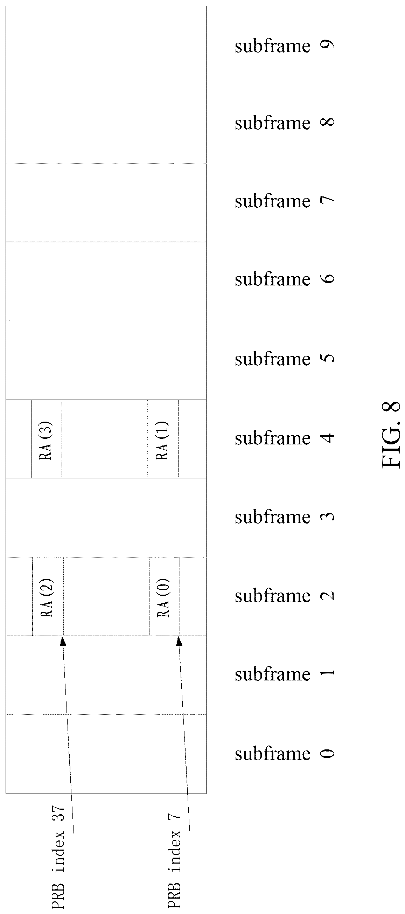

A schematic diagram of the PRACH starting resources distribution within 1 Frame is as shown in FIG. 8, the PRACH starting resources RA(0) and RA(1) are indicated by the prach-ConfigIndex1 and prach-FreqOffset1; the PRACH starting resources RA(2) and RA(3) are indicated by the prach-ConfigIndex2 and prach-FreqOffset2;
wherein, the random access channel configuration information may be configured in at least one of the following:

    a System Information Block (SIB);
    a Master Information Block (MIB); and
    Downlink Control Information (DCI).

Wherein, the random access channel configuration information may be sent in at least one of the following:

    a Physical Broadcast Channel (PBCH);
    a Physical Downlink Control Channel (PDCCH); and
    a Physical Downlink Shared Channel (PDSCH).

(2) The random access channel resources are divided into one or a plurality of random access channel resource subsets, each subset can support one type or more types of the second nodes sending random access sequences;
wherein, the second nodes may be sorted according to one of the following principles:

    sorted according to different coverage improvement levels required to be supported by the second nodes;

    allocated according to the different numbers of the repeated transmissions of the random access sequences required to be supported by the second nodes; and

    the repeat times of the Physical Broadcast Channel (PBCH) used when the PBCH is decoded successfully by the second nodes.

    In the embodiment of the present invention, the second nodes are divided into two types (Type_1 and Type_2) according to the different coverage improvement levels required to be supported by the second nodes and the random access channel resources are divided into two subsets (a subset 1 and a subset 2), each subset supports one type of the second nodes sending the random access sequences, for example, the second nodes of the Type_1 send the random access sequences on the subset 1, and the second nodes of the Type_2 send the random access sequences on the subset 2.
    Wherein, the first nodes illustrated are one of the following:
    a Macrocell, a Microcell, a Picocell, a Femtocell (also called a home eNode B), a low power node (LPN), a Relay and a Small Cell.
    In the embodiment of the present invention, the indexes of the PRACH starting resources in the subset 1 are RA(0) and RA(1) in each Frame; the indexes of the PRACH starting resources in the subset 2 are RA(2) and RA(3) in each Frame.
    In addition to the embodiment of the present invention, the PRACH starting resources in the subset 1 may also be indicated by the prach-ConfigIndex1 and prach-FreqOffset1; the PRACH starting resources in the subset 2 may also be indicated by the prach-ConfigIndex2 and prach-FreqOffset2.
    (3) When the second nodes send the random access sequences, the indexes of the occupied starting resources may be obtained in the following manners:

    the indexes of the PRACH starting resources allocated to each type of the second nodes are resequenced and then determined based on the following formula:

$$Type\_i\_Start' = \{RAIdx' \mid \mod(RAIdx', RACH\,Re\,pTime'_{Type\_i}) = 0\},$$

    wherein, $RAIdx'$ is a resequenced index of the PRACH starting resources allocated to each type of the second nodes, the values thereof are RA'(0), RA'(1), ...;

RACHRepTime$'_{Type\_i}$ is the number of the PRACH starting resources included in the resources occupied by the random access signalings sent by the second nodes of the type i (Type_i); and

Type_$i\_Start'$ is the index of the starting resources occupied when the second nodes of the type i (Type_i) send the random access sequences.

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 9 of the present invention

The embodiment of the present invention provides a configuration for random access channel resources, the procedure of accomplishing the MTC UE access by using the method is as follows, which includes:

(1) Random access channel resource confirguation information is indicated by a plurality of pieces of random access channel configuration information, prach-ConfigIndex and prach-FreqOffset are at least contained in the random access channel configuration information.

In the embodiment of the present invention, it is assumed that the random access channel resource configuration information is indicated by two pieces of random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system.

In the embodiment of the present invention, it is assumed that the predefined time domain length is 1 Frame. prach-ConfigIndex1 information in the indication of the first piece of PRACH configuration information indicates that the PRACH starting resources occupy the subframe 2 and the subframed 4 in the time domain within 1 Frame, and prach-FreqOffset1 describes that the first PRB index occupied by the PRACH starting resources in the frequency domain within 1 Frame is a PRB Index7;

prach-ConfigIndex2 information in the indication of the second piece of PRACH configuration information indicates that the PRACH starting resources occupy the subframe 2 and the subframe 4 in the time domain within 1 Frame, and prach-FreqOffset2 describes that the first PRB index occupied by the PRACH starting resources in the frequency domain within 1 Frame is a PRB Index37.

A schematic diagram of the PRACH starting resources distribution within 1 Frame is as shown in FIG. 8, the PRACH starting resources RA(0) and RA(1) are indicated by the prach-ConfigIndex1 and prach-FreqOffset1; the PRACH starting resources RA(2) and RA(3) are indicated by the prach-ConfigIndex2 and prach-FreqOffset2.

Wherein, the random access channel configuration information may be configured in at least one of the following:

a System Information Block (SIB);

a Master Information Block (MIB); and

Downlink Control Information (DCI).

(2) The random access channel resources are divided into one or a plurality of random access channel resource subsets, each subset can support one type or more types of the second nodes sending random access sequences; wherein, the second nodes may be sorted according to one of the following principles:

sorted according to different coverage improvement levels required to be supported by the second nodes;

allocated according to different numbers of the repeated transmissions of the random access sequences required to be supported by the second nodes; and

the repeat times of the Physical Broadcast Channel (PBCH) used when the PBCH is decoded successfully by the second nodes.

In the embodiment of the present invention, the second nodes are divided into two types (Type_1 and Type_2) according to the different coverage improvement levels required to be supported by the second nodes and the random access channel resources are divided into two subsets (a subset 1 and a subset 2), the indexes of the PRACH starting resources occupied by each subset are configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.
Wherein, the first nodes illustrated are one of the following:
a Macrocell, a Microcell, a Picocell, a Femtocell (also called a home eNode B), a low power node (LPN), a Relay and a Small Cell.
In the embodiment of the present invention, the indexes of the PRACH starting resources in the subset 1 are RA(0) and RA(3) in each Frame; the indexes of the PRACH starting resources in the subset 2 are RA(2) and RA(1) in each Frame.
(3) When the second nodes send the random access sequences, the indexes of the occupied starting resources may be obtained in the following manners:

the indexes of the PRACH starting resources allocated to each type of the second nodes are resequenced and then determined based on the following formula:

$$Type\_i\_Start' = \{RAIdx' \,|\, \mathrm{mod}(RAIdx', RACH\,RepTime'_{Type\_i}) = 0\},$$

wherein, RAIdx' is a resequenced index of the PRACH starting resources allocated to each type of the second nodes, the values thereof are RA'(0), RA'(1), ...;
RACHRepTime'$_{Type\_i}$ is the number of the PRACH starting resources included in the resources occupied by the random access signalings sent by the second nodes of the type i (Type_i); and
Type_$i$_Start' is the index of the starting resources occupied when the second nodes of the type i (Type_i) send the random access sequences.

(4) The second nodes send the random access signalings on the allocated random access resources;
(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.
In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 10 of the present invention

The embodiment of the present invention provides a configuration for random access channel resources, the procedure of accomplishing the MTC UE access by using the method is as follows, which includes:

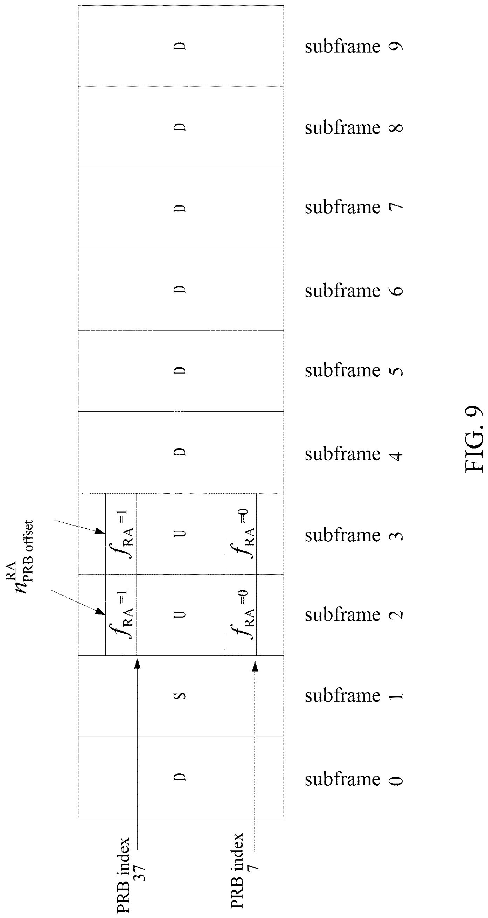

(1) There are 7 uplink and downlink subframe configuration types in TDD-LTE systems in total. The uplink and downlink subframe configuration type selected by the TDD-LTE systems in the embodiment of the present invention is 4, i.e., the frame structure of the system is as shown in FIG. 9, a subframe 0 and subframe 4 ~ subframe 9 are downlink subframes, a subframe 1 is a special subframe, and a subframe 2 and a subframe 3 are uplink subframes.

Random access channel resource configuration information is indicated by one piece of random access channel configuration information, prach-ConfigIndex and prach-FreqOffset are at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, the subframe 2 and the subframe 3 are uplink subframes, it is assumed that the predefined time domain length is 1 Frame, the second nodes, by decoding the prach-ConfigIndex information sent by the first nodes, learn that the described PRACH starting resources occupy the subframes 2 and 3 in the time domain within 1 Frame, and there are starting resources of 4 PRACHs in total, as shown in FIG. 9.

Wherein, the prach-FreqOffset is used to indicate the first PRB index occupied by the PRACH starting resources described by the prach-ConfigIndex in the frequency domain.

Further, the second nodes may be one or a plurality of terminals or one or a plurality of terminal groups.

In the embodiment of the present invention, the minimum PRB index $n_{\mathrm{PRB}}^{\mathrm{RA}}$ of the starting resources of each PRACH in the frequency domain is obtained based on the following formula:

$$n_{\mathrm{PRB}}^{\mathrm{RA}} = \begin{cases} n_{\mathrm{PRB\,offset}}^{\mathrm{RA}} + 6\left\lfloor \dfrac{f_{\mathrm{RA}}}{2} \right\rfloor, & \text{if } f_{\mathrm{RA}} \bmod 2 = 0 \\ N_{\mathrm{RB}}^{\mathrm{UL}} - 6 - n_{\mathrm{PRB\,offset}}^{\mathrm{RA}} - 6\left\lfloor \dfrac{f_{\mathrm{RA}}}{2} \right\rfloor, & \text{otherwise} \end{cases},$$

wherein, the value of $n_{\mathrm{PRB\,offset}}^{\mathrm{RA}}$ is described by the prach-FreqOffset, e.g., $n_{\mathrm{PRB\,offset}}^{\mathrm{RA}} = 7$;

$N_{\mathrm{RB}}^{\mathrm{UL}}$ is the magnitude of the uplink system bandwidth with the PRB as a unit, e.g., $N_{\mathrm{RB}}^{\mathrm{UL}} = 50$; and

$f_{\mathrm{RA}}$ is an index of the starting resources of the PRACHs in the same subframe, e.g., $f_{\mathrm{RA}}$=0~1.

A schematic diagram of the PRACH starting resources distribution within the subframe 2 and the subframe 3 is as shown in FIG. 9.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The random access channel resources are divided into one or a plurality of random access channel resource subsets, each subset can support one type or more types of the second nodes sending random access sequences; wherein, the second nodes may be sorted according to one of the following principles:

sorted according to different coverage improvement levels required to be supported by the second nodes;

allocated according to different numbers of the repeated transmissions of the random access sequences required to be supported by the second nodes; and

the repeat times of the Physical Broadcast Channel (PBCH) used when the PBCH is decoded successfully by the second nodes.

In the embodiment of the present invention, the second nodes are divided into two types (Type_1 and Type_2) according to the different coverage improvement levels required to be supported and the random access channel resources are divided into two subsets (a subset 1 and a subset 2), the indexes of the PRACH starting resources occupied by each subset are configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.
Wherein, the first nodes illustrated are one of the following:
a Macrocell, a Microcell, a Picocell, a Femtocell (also called a home eNode B), a low power node (LPN), a Relay and a Small Cell.
In the embodiment of the present invention, the index of the PRACH starting resources in the subset 1 is $f_{RA}$=0 in each Frame; the index of the PRACH starting resources in the subset 2 is $f_{RA}$=1 in each Frame.
(3) When the second nodes send the random access sequences, the indexes of the occupied starting resources may be obtained in the following manners:

the indexes of the PRACH starting resources allocated to each type of the second nodes are resequenced and then determined based on the following formula:

$$Type\_i\_Start' = \{RAIdx' \mid \bmod(RAIdx', RACHRepTime'_{Type\_i}) = 0\},$$

wherein, $RAIdx'$ is a resequenced index of the PRACH starting resources in each subset, the values thereof are RA'(0), RA'(1), ...;
$RACHRepTime'_{Type\_i}$ is the number of the PRACH starting resources included in the resources occupied by the random access signalings sent by the second nodes of the type i (Type_i); and
$Type\_i\_Start'$ is the index of the starting resources occupied when the second nodes of the type i (Type_i) send the random access sequences.

In the embodiment of the present invention, the indexes of the PRACH starting resources of the second nodes of the type 1 (Type_1) are $f_{RA}$=0 of the Subframe 2 and $f_{RA}$=0 of the Subframe 4 in the Frame and are resequenced as RA'(0), RA'(1), RA'(2), ..., and it is assumed that the time domain length of the random access sequences sent by the Type_1 is 4 subframes and $RACHRepTime'_{Type\_1}$=2, then the indexes of the starting resources when the Type_1 sends the random access sequences are RA'(0), RA'(2), RA'(4), ...; the indexes of the PRACH starting resources of the second nodes of the type 2 (Type_2) are $f_{RA}$=1 of the subframe 2 and $f_{RA}$=1 of the subframe 4 in the Frame and are resequenced as RA'(0), RA'(1), RA'(2), ..., and it is assumed that the time domain length of the random access sequences sent by the Type_2 is 2 subframes and RACHRepTime'_{Type_2}=1, then the indexes of the starting resources when the Type_2 sends the random access sequences are RA'(0), RA'(1), RA'(2), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

The random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 11 of the present invention

The embodiment of the present invention provides a configuration for random access channel resources, the procedure of accomplishing the MTC UE access by using the method is as follows, which includes:

(1) Random access channel resource configuration information is indicated by one piece of random access channel configuration information, prach-ConfigIndex and prach-FreqOffset are at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, it is assumed that the predefined time domain length is 1 Frame, the second nodes, by decoding the prach-ConfigIndex information sent by the first nodes, learn that the described PRACH starting resources occupy subframes 0, 2, 4, 6 and 8 in the time domain within 1 Frame, and there are starting resources of 5 PRACHs in total, as shown in FIG. 1.

Further, the second nodes may be one or a plurality of terminals or one or a plurality of terminal groups.

Wherein, prach-FreqOffset is used to indicate frequency domain offset information of the PRACH starting resources described by the prach-ConfigIndex in the frequency domain. In the embodiment of the present invention, prach-FreqOffset=7, i.e., the first PRB index $n_{\text{PRB}}^{\text{RA}}$ occupied by the described PRACH starting resources in the frequency domain within a Frame k is determined based on the following formula:

$$n_{\text{PRB}}^{\text{RA}} = \begin{cases} n_{\text{PRB offset}}^{\text{RA}}, & \text{if } k \bmod 2 = 0 \\ N_{\text{RB}}^{\text{UL}} - 6 - n_{\text{PRB offset}}^{\text{RA}}, & \text{otherwise} \end{cases},$$

wherein, the value of $n_{\text{PRB offset}}^{\text{RA}}$ is described by the prach-FreqOffset, e.g., $n_{\text{PRB offset}}^{\text{RA}} = 7$;

$N_{\text{RB}}^{\text{UL}}$ is the magnitude of the uplink system bandwidth with the PRB as a unit, e.g., $N_{\text{RB}}^{\text{UL}} = 50$; and

k is a Frame index number.

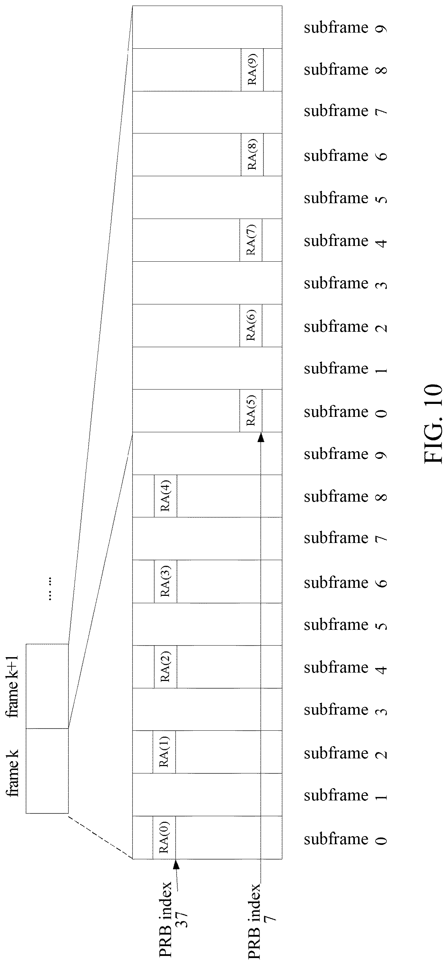

In the embodiment of the present invention, a schematic diagram of allocation of the PRACH starting resources allocated in a plurality of Frames is as shown in FIG. 10, and the PRACH starting resources allocated in the plurality of Frames are resequenced, indexes of the PRACH starting resources in the Frame k are RA(0) ~ RA(4), indexes of the PRACH starting resources in a Frame k+1 are RA(5) ~ RA(9), and so on.

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);
a Physical Downlink Control Channel (PDCCH); and
a Physical Downlink Shared Channel (PDSCH).

(2) The random access channel resources are divided into one or a plurality of random access channel resource subsets, each subset can support one type or more types of the second nodes sending random access sequences; wherein, the second nodes may be sorted according to one of the following principles:

sorted according to different coverage improvement levels required to be supported by the second nodes;

allocated according to different numbers of the repeated transmissions of the random access sequences required to be supported by the second nodes; and

the repeat times of the Physical Broadcast Channel (PBCH) used when the PBCH is decoded successfully by the second nodes.

In the embodiment of the present invention, the second nodes are divided into two types (Type_1 and Type_2) according to the different coverage improvement levels required to be supported by the second nodes and the random access channel resources are divided into two subsets (a subset 1 and a subset 2), the indexes of the PRACH starting resources occupied by each subset are configured by the system or sent by the first nodes. Each subset supports one type of the second nodes sending the random access sequences, for example, the second nodes of the Type_1 send the random access sequences on the subset 1, and the second nodes of the Type_2 send the random access sequences on the subset 2.

In the embodiment of the present invention, the random access sequences sent by the second nodes of the Type_1 occupy 8 subframes, and the random access sequences sent by the second nodes of the Type_2 occupy 12 subframes;

wherein, the first nodes illustrated are one of the following:

a Macrocell, a Microcell, a Picocell, a Femtocell (also called a home eNode B), a low power node (LPN), a Relay and a Small Cell.

In the embodiment of the present invention, the indexes of the PRACH starting resources occupied by the subset 1 are RA(0) ~ RA(1), RA(5) ~ RA(6), RA(10) ~ RA(11), RA(15) ~ RA(16), ...; the indexes of the PRACH starting resources occupied by the subset 2 are RA(2) ~ RA(4), RA(7) ~ RA(9), RA(12) ~ RA(14), RA(17) ~ RA(19), ..., as shown in FIG. 10.

(3) When the second nodes send the random access sequences, the indexes of the occupied starting resources may be obtained in the following manners:

in the embodiment of the present invention, the indexes of the PRACH starting resources occupied when the second nodes of the Type_1 send the random access sequences on the subset 1 are chosen from the RA(0), RA(10), RA(20), ...; the indexes of the PRACH starting resources occupied when the second nodes of the Type_2 send the random access sequences on the subset 2 may be chosen from the RA(1), RA(11), RA(21), ....

(4) The second nodes send the random access signalings on the allocated random access resources;

(5) After the first nodes receive the random access signalings sent by the second nodes, the first nodes send random access response signalings to the second nodes to respond to the random access signalings sent by the second nodes.

Wherein, the random access response information of one or a plurality of the second nodes is carried in the random access response signalings; and the type of the second nodes of the random access response information may be carried in the same random access response signaling, and it is configured by the system or sent to the second nodes by the first nodes.

In the embodiment of the present invention, it is assumed that two second nodes such as a User Equipment 1 (UE1) and a User Equipment 2 (UE2) are carried in the random access response signalings and the UE1 and UE2 belong to the same type, that is, the coverage improvement levels of the UE1 and UE2 are same or the number of repeated transmissions of the random access sequences required to be supported by the UE1 and UE2 are same or the RA-RNTIs calculated and obtained by the UE1 and UE2 are same.

In addition to the embodiment of the present invention, the UE1 and UE2 may also belong to different types, but it is required that the system predefine types of the second nodes which can send the random access response information in the same random access response signaling, and the UE1 and UE2 belong to the types.

Embodiment 12 of the present invention

The embodiment of the present invention provides a configuration for random access channel resources, the procedure of accomplishing the MTC UE access by using the method is as follows, which includes:

(1) In FDD-LTE systems, random access channel resource configuration information is indicated by one piece of random access channel configuration information, prach-ConfigIndex and prach-FreqOffset are at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, the prach-ConfigIndex is equivalent to "PRACH Configuration Index" in Table 2, as shown in Table 2, "PreambleFormat", "System frame number" and "Subframe number" may be known according to the value of the PRACH Configuration Index. Wherein, "PreambleFormat" represents a random access sequence format; "System frame number" represents a system frame number (Even represents an even frame, and Any represents any frame); and "Subframe number" represents a subframe number.

Table 2: FDD LTE prach-ConfigIndex resource mapping table

| PRACH Configuration Index | Preamble Format | System frame number | Subframe number | PRACH Configuration Index | Preamble Format | System frame number | Subframe number |
|---|---|---|---|---|---|---|---|
| 0 | 0 | Even | 1 | 32 | 2 | Even | 1 |
| 1 | 0 | Even | 4 | 33 | 2 | Even | 4 |
| 2 | 0 | Even | 7 | 34 | 2 | Even | 7 |
| 3 | 0 | Any | 1 | 35 | 2 | Any | 1 |
| 4 | 0 | Any | 4 | 36 | 2 | Any | 4 |
| 5 | 0 | Any | 7 | 37 | 2 | Any | 7 |
| 6 | 0 | Any | 1, 6 | 38 | 2 | Any | 1, 6 |
| 7 | 0 | Any | 2, 7 | 39 | 2 | Any | 2, 7 |
| 8 | 0 | Any | 3, 8 | 40 | 2 | Any | 3, 8 |
| 9 | 0 | Any | 1, 4, 7 | 41 | 2 | Any | 1, 4, 7 |
| 10 | 0 | Any | 2, 5, 8 | 42 | 2 | Any | 2, 5, 8 |
| 11 | 0 | Any | 3, 6, 9 | 43 | 2 | Any | 3, 6, 9 |
| 12 | 0 | Any | 0, 2, 4, 6, 8 | 44 | 2 | Any | 0, 2, 4, 6, 8 |
| 13 | 0 | Any | 1, 3, 5, 7, 9 | 45 | 2 | Any | 1, 3, 5, 7, 9 |

(continued)

| PRACH Configuration Index | Preamble Format | System frame number | Subframe number | PRACH Configuration Index | Preamble Format | System frame number | Subframe number |
|---|---|---|---|---|---|---|---|
| 14 | 0 | Any | 0, 1, 2, 3, 4, 5, 6, 7, 8, 9 | 46 | N/A | N/A | N/A |
| 15 | 0 | Even | 9 | 47 | 2 | Even | 9 |
| 16 | 1 | Even | 1 | 48 | 3 | Even | 1 |
| 17 | 1 | Even | 4 | 49 | 3 | Even | 4 |
| 18 | 1 | Even | 7 | 50 | 3 | Even | 7 |
| 19 | 1 | Any | 1 | 51 | 3 | Any | 1 |
| 20 | 1 | Any | 4 | 52 | 3 | Any | 4 |
| 21 | 1 | Any | 7 | 53 | 3 | Any | 7 |
| 22 | 1 | Any | 1, 6 | 54 | 3 | Any | 1, 6 |
| 23 | 1 | Any | 2, 7 | 55 | 3 | Any | 2, 7 |
| 24 | 1 | Any | 3, 8 | 56 | 3 | Any | 3, 8 |
| 25 | 1 | Any | 1, 4, 7 | 57 | 3 | Any | 1, 4, 7 |
| 26 | 1 | Any | 2, 5, 8 | 58 | 3 | Any | 2, 5, 8 |
| 27 | 1 | Any | 3, 6, 9 | 59 | 3 | Any | 3, 6, 9 |
| 28 | 1 | Any | 0, 2, 4, 6, 8 | 60 | N/A | N/A | N/A |
| 29 | 1 | Any | 1, 3, 5, 7, 9 | 61 | N/A | N/A | N/A |
| 30 | N/A | N/A | N/A | 62 | N/A | N/A | N/A |
| 31 | 1 | Even | 9 | 63 | 3 | Even | 9 |

When prach-ConfigIndex=14, by looking up the Table 2, it can be known that the random access sequence format is PreambleFormat=0 (the PRACH resources occupy only 1 Subframe under the format), and the PRACH starting resources, i.e., the PRACH resources in the embodiment of the present invention, are configured in all of Subframes 0-9 of each Frame.

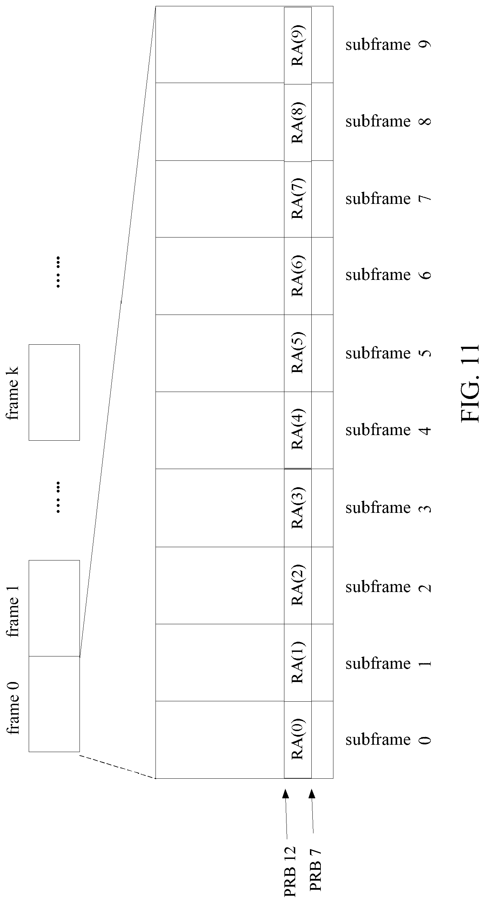

When prach-FreqOffset=7, it is indicated that the minimum PRB index occupied by the PRACH resources in the frequency domain is a PRB7, if 6 PRBs are occupied by the PRACH resources in the frequency domain, then PRB7~PRB12 in each Subframe in each Frame are configured as the PRACH resources, as shown in FIG. 11.

In the embodiment of the present invention, an LTE UE and an MTC UE simultaneously exist in the FDD-LTE systems, and the PRACH resources used by the LTE UE and the MTC UE are different, the PRACH resources in FIG. 11 are allocated to the MTC UE. The MTC UE is further divided into an MTC UE which does not need coverage improvement (i.e., a Normal MTC UE) and an MTC UE which needs coverage improvement (i.e., a Coverage Improvement MTC UE). The Coverage Improvement MTC UE is further divided into multiple levels, it is divided into 3 levels in the embodiment of the present invention: a Coverage Improvement Level 1, a Coverage Improvement Level 2 and a Coverage Improvement Level 3 respectively, and the division principles are at least one of the following:

divided into multiple levels according to the different coverage improvement levels required to be supported by the Coverage Improvement MTC UE;

divided into multiple levels according to the different numbers of repeated transmissions of the random access sequences required to be supported by the Coverage Improvement MTC UE; and

divided into multiple levels according to the different repeat times of the Physical Broadcast Channel (PBCH) used when the Coverage Improvement MTC UE decodes successfully the PBCH.

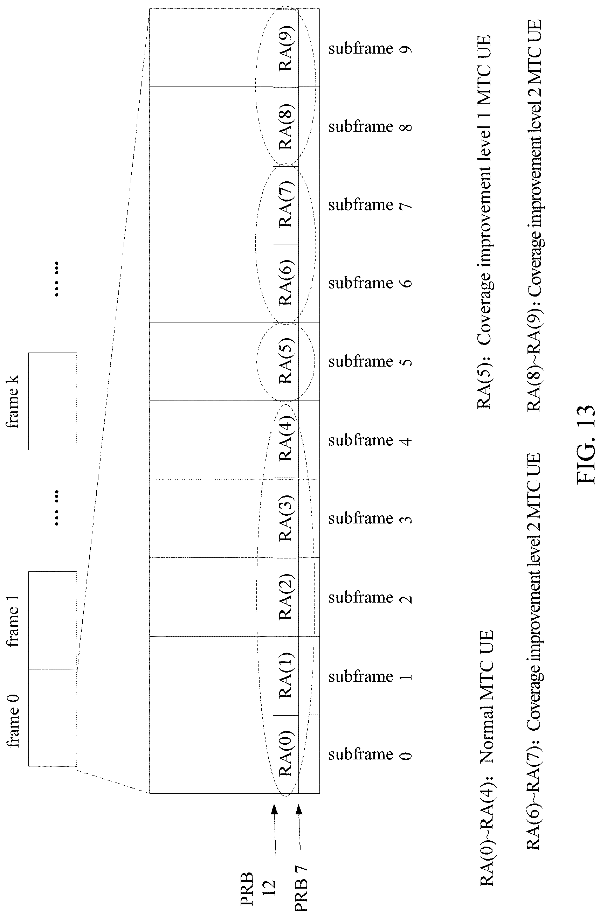

In the embodiment of the present invention, PRACH resources RA(0) ~ RA(4) in the Frame 0 are allocated to the Normal MTC UE; RA(5) is allocated to the MTC UE of the Coverage Improvement Level 1; RA(6) ~ RA(7) are allocated to the MTC UE of the Coverage Improvement Level 2; and RA(8) ~ RA(9) are allocated to the MTC UE of the Coverage Improvement Level 3, as shown in FIG. 12. The PRACH resources are allocated in the similar manner in the Frame 1, Frame 2, ... Frame k....

Wherein, the random access channel configuration information may be configured in at least one of the flowing:

a System Information Block (SIB);

a Master Information Block (MIB); and

Downlink Control Information (DCI).

Wherein, the random access channel configuration information may be sent in at least one of the flowing:

a Physical Broadcast Channel (PBCH);

a Physical Downlink Control Channel (PDCCH);

an Enhanced Physical Downlink control Channel (PDCCH);and

a Physical Downlink Shared Channel (PDSCH).

(2) The indexes of the starting resources occupied when the MTC UE sends the random access sequences may be obtained in the following manners:

the indexes of the PRACH starting resources allocated to each type of the MTC UE (the Normal MTC UE or the Coverage Improvement Level 1 MTC UE or the Coverage Improvement Level 2 MTC UE or the Coverage Improvement Level 3 MTC UE) are resequenced and then determined based on the following formula:

$$Start^i = \{ \mathrm{RAIdx}_k^i \, \big| \, \mathrm{mod}(\mathrm{RAIdx}_k^i, \mathrm{RACH\,Re\,pTime}_i) = 0 \}$$,

wherein, $\mathrm{RAIdx}_k^i$ is the kth resource after the PRACH starting resources of the MTC UE of the type i are resequenced;

i=0 represents the Normal MTC UE; i=1 represents the Coverage Improvement Level 1 MTC UE; i=2 represents the Coverage Improvement Level 2 MTC UE; i=3 represents the Coverage Improvement Level 3 MTC UE;

RACHRepTime$_i$ is the number of the PRACH starting resources included in the resources occupied by the random access signalings sent by the MTC UE of the type i; and

$Start^i$ is the index of the PRACH starting resources occupied when the MTC UE of the type i sends the random access sequences.

(3) The MTC UE sends the random access signalings on the allocated random access resources;

(4) After the first nodes receive the random access signalings sent by the MTC UE, the first nodes send random access response signalings to the MTC UE to respond to the random access signalings sent by the MTC UE.

Wherein, the random access response information of one or a plurality of the MTC UEs is carried in the random access response signalings; and the type of the MTC UE of the random access response information may be carried in the same random access response signaling, and it is configured by the system or sent to the MTC UEs by the first nodes.

In the embodiment of the present invention, it is assumed that the random access response information of two MTC UEs such as a UE1 and a UE2 is carried in the random access response signalings, and both the UE1 and the UE2 belong to the Coverage Improvement Level 2, and the repeat times of the random access response signalings corresponding to the Coverage Improvement Level 2 is A, the correspondence relationship described above is configured by the system. Thus the random access response signalings are sent A times repeatedly by the first nodes.

In addition to the embodiment of the present invention, it is assumed that the random access response information of two MTC UEs such as a UE1 and a UE2 is carried in the random access response signalings, and both the UE1 and the UE2 belong to the Coverage Improvement Level 2, and the information of repeat times of the random access response signalings is indicated directly by the downlink control information and is sent to the UE1 and UE2 through the PDCCH or ePDCCH;

In addition to the embodiment of the present invention, it is assumed that the random access response information of two MTC UEs such as a UE1 and a UE2 is carried in the random access response signalings, and the number of repeated transmissions of the random access sequences supported by the UE1 and the UE2 are same, e.g., they are both C times, and the repeat times of the random access response signalings corresponding to the repeat times C of transmission of the random access sequences is A, the correspondence relationship described above is configured by the system;

in addition to the embodiment of the present invention, the UE1 and UE2 may also belong to different Coverage Improvement Levels, for example, the UE1 belongs to the Coverage Improvement Level 2, the UE2 belongs to the Coverage Improvement Level 3, and the repeat times of the random access response signalings corresponding to the Coverage Improvement Level 2 is A, and the repeat times of the random access response signalings corresponding to the Coverage Improvement Level 3 is B, for example, B>A, thus the random access response signalings are sent B times repeatedly;

In addition to the embodiment of the present invention, the number of repeated transmissions of the random access sequences supported by the UE1 and UE2 are not same, for example, the number of repetitions of transmission of the random access sequences supported by the UE1 is D and the number of repetitions of transmission of the random access sequences supported by the UE2 is F. The number of repetitions of the random access response signalings corresponding to the number D of repetitions of transmission of the random access sequences is A, and the number of repetitions of the random access response signalings corresponding to the number F of repetitions of transmission of the random access sequences is B, for example, B>A, thus the random access response signalings are sent B times repeatedly;

in addition to the embodiment of the present invention, the maximum number of repetitions of transmission of the PBCH configured by the systems is G, and the number of repetitions of the random access response signalings corresponding to the maximum number G of repetitions of transmission of the PBCH is A, it is assumed that the random access response information of two MTC UEs such as the UE1 and the UE2 is carried in the random access response signalings, the random access response signalings are sent A times repeatedly;

in addition to the embodiment of the present invention, several kinds of numbers of repeated transmissions of the PBCH are configured by the system, for example, they are G1, G2, G3 and G4 respectively, and there is a correspondence relationship between the above number of repeated transmissions of the PBCH and the number of repeated transmissions of the random access response signalings, e.g., G1, G2, G3 and G3 correspond to the repeat times A1, A2, A3 and A4 of transmission of the random access response signalings respectively. It is assumed that the random access response information of two MTC UEs such as the UE1 and the UE2 is carried in the random access response signalings, and when the PBCH is decoded by the UE1 and the UE2, the accumulated repeat times of the PBCH are closest to G1 and G2 respectively; thus the random access response signalings are sent A2 times repeatedly;

in addition to the embodiment of the present invention, several kinds of numbers of repeated transmissions of the PBCH are configured by the system, for example, they are G1, G2, G3 and G4 respectively, and there is a correspondence relationship between the above number of repeated transmissions of the PBCH and the number of repeated transmissions of the random access response signalings, e.g., G1, G2, G3 and G3 correspond to the repeat times A1, A2, A3 and A4 of transmission of the random access response signalings respectively. It is assumed that the random access response information of two MTC UEs such as the UE1 and the UE2 is carried in the random access response signalings, and when the PBCH is decoded by the UE1 and UE2, the accumulated repeat times of the PBCH are all closest to G2; thus the random access response signalings are sent A2 times repeatedly;

in addition to the embodiment of the present invention, the maximum number of repetitions of transmission of the MIB configured by the system is G, and the number of repetitions of the random access response signalings corresponding to the maximum number G of repetitions of transmission of the MIB is A, it is assumed that the random access response information of two MTC UEs such as the UE1 and the UE2 is carried in the random access response signalings, the random access response signalings are sent A times repeatedly;

in addition to the embodiment of the present invention, several kinds of numbers of repeated transmissions of the MIB are configured by the system, for example, they are G1, G2, G3 and G4 respectively, and there is a correspondence relationship between the above number of repeated transmissions of the MIB and the number of repeated transmissions of the random access response signalings, e.g., G1, G2, G3 and G4 correspond to the repeat times A1, A2, A3 and A4 of transmission of the random access response signalings respectively. It is assumed that the random access response information of two MTC UEs such as the UE1 and the UE2 is carried in the random access response signalings, and when the MIB is decoded by the UE1 and UE2, the accumulated repeat times of the MIB are closest to G1 and G2 respectively, thus the random access response signalings are sent A2 times repeatedly;

in addition to the embodiment of the present invention, several kinds of numbers of repeated transmissions of the MIB are configured by the system, for example, they are G1, G2, G3 and G4 respectively, and there is a correspondence relationship between the above number of repeated transmissions of the MIB and the number of repeated transmissions of the random access response signalings, e.g., G1, G2, G3 and G4 correspond to the repeat times A1, A2, A3 and A4 of transmission of the random access response signalings respectively. It is assumed that the random access response information of two MTC UEs such as the UE1 and the UE2 is carried in the random access response signalings, and when the MIB is decoded by the UE1 and UE2, the accumulated repeat times of the MIB are all closest to G2, thus the random access response signalings are sent A2 times repeatedly;

in addition to the embodiment of the present invention, the maximum number of repetitions of transmission of the SIB configured by the system is G, and the number of repetitions of transmission of the random access response signalings corresponding to the maximum number G of repetitions of transmission of the SIB is A, it is assumed that the random access response information of two MTC UEs such as the UE1 and the UE2 is carried in the random access response signalings, the random access response signalings are sent A times repeatedly;

in addition to the embodiment of the present invention, several kinds of numbers of repeated transmissions of the SIB are configured by the system, for example, they are G1, G2, G3 and G4 respectively, and there is a correspondence relationship between the above number of repeated transmissions of the SIB and the number of repeated transmissions of the random access response signalings, e.g., G1, G2, G3 and G4 correspond to the repeat times A1, A2, A3 and A4 of transmission of the random access response signalings respectively. It is assumed that the random access response information of two TC UEs such as the UE1 and the UE2 is carried in the random access response signalings, and when the SIB is decoded by the UE1 and UE2, the accumulated repeat times of the SIB are closest to G1 and G2 respectively, thus the random access response signalings are sent A2 times repeatedly;

in addition to the embodiment of the present invention, several kinds of numbers of repeated transmissions of the SIB are configured by the system, for example, they are G1, G2, G3 and G4 respectively, and there is a correspondence relationship between the above number of repeated transmissions of the SIB and the number of repeated transmissions of the random access response signalings, e.g., G1, G2, G3 and G4 correspond to the repeat times A1, A2, A3 and A4 of transmission of the random access response signalings respectively. It is assumed that the random access response information of two MTC UEs such as the UE1 and the UE2 is carried in the random access response signalings, and when the SIB is decoded by the UE1 and UE2, the accumulated repeat times of the SIB are all closest to G2, thus the random access response signalings are sent A2 times repeatedly;

wherein, the first nodes illustrated are one of the following:

a Macrocell, a Microcell, a Picocell, a Femtocell (also called a home eNode B), a low power node (LPN), a Relay and a Small Cell.

Embodiment 13 of the present invention

The embodiment of the present invention provides a configuration for random access channel resources, the procedure of accomplishing the MTC UE access by using the method is as follows, which includes:

(1) In FDD-LTE systems, random access channel resource configuration information is indicated by one piece of random access channel configuration information, prach-ConfigIndex and prach-FreqOffset are at least contained in the random access channel configuration information.

Wherein, the prach-ConfigIndex is used to describe allocated time domain position information of PRACH starting resources (the time domain length being one subframe) within one predefined time domain length and the number of the PRACH starting resources within the predefined time domain length. A mapping relationship exists between the different values of the prach-ConfigIndex and the position information of the PRACH starting resources within the predefined time domain length and the number of the PRACH starting resources within the predefined time domain length and it is configured by the system. In the embodiment of the present invention, the prach-ConfigIndex is equivalent to "PRACH Configuration Index" in Table 2, as shown in Table 2, "PreambleFormat", "System frame number" and "Subframe number" may be known according to the value of the PRACH Configuration Index. Wherein, "PreambleFormat" represents a random access sequence format; "System frame number" represents a system frame number (Even represents an even frame, and Any represents any frame); and "Subframe number" represents a subframe number.

When prach-ConfigIndex=14, by looking up the Table 2, it can be known that the random access sequence format is PreambleFormat=0 (the PRACH resources occupy only 1 Subframe under the format), and the PRACH starting resources, i.e., the PRACH resources in the embodiment of the present invention, are configured in all of subframes 0-9 of each Frame.

When prach-FreqOffset=7, the minimum PRB index $n_{\mathrm{PRB}}^{\mathrm{RA}}$ occupied by the PRACH resources in the frequency domain within the Frame k can be calculated and obtained based on the prach-FreqOffset;

$$n_{\text{PRB}}^{\text{RA}} = \begin{cases} n_{\text{PRB offset}}^{\text{RA}}, & \text{if } k \bmod 2 = 0 \\ N_{\text{RB}}^{\text{UL}} - N_{\text{PRB}}^{\text{RA}} - n_{\text{PRB offset}}^{\text{RA}}, & \text{otherwise} \end{cases},$$

wherein, the value of $n_{\text{PRB offset}}^{\text{RA}}$ is described by the prach-FreqOffset, e.g., $n_{\text{PRB offset}}^{\text{RA}} = 7$;

$N_{\text{RB}}^{\text{UL}}$ is the magnitude of the uplink system bandwidth with the PRB as a unit, e.g., $N_{\text{RB}}^{\text{UL}} = 50$;

k is a Frame index number; and

$N_{\text{PRB}}^{\text{RA}}$ the number of PRBs occupied by the PRACH in the frequency domain, e.g., $N_{\text{PRB}}^{\text{RA}} = 6$.

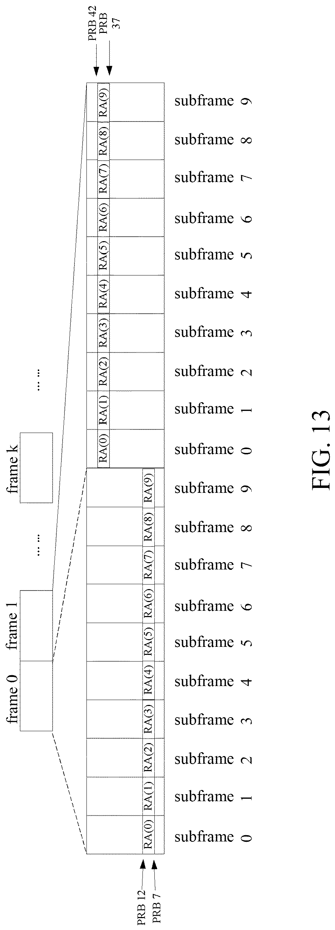

The PRACH resources configuration in each Frame is as shown in FIG. 13, frequency domain resources PRB7~PRB12 are occupied in the Frame 0, Frame 2, Frame 4,...; frequency domain resources PRB37~PRB42 are occupied in the Frame 1, Frame 3, Frame 5,....

In the embodiment of the present invention, an LTE UE and an MTC UE simultaneously exist in the FDD-LTE systems, and the PRACH resources used by the LTE UE and the MTC UE are different, the PRACH resources in FIG. 13 are allocated to the MTC UE. The MTC UE is further divided into an MTC UE which does not need coverage improvement (i.e., a Normal MTC UE) and an MTC UE which needs coverage improvement (i.e., a Coverage Improvement MTC UE). The Coverage Improvement MTC UE is further divided into multiple levels, it is divided into 3 levels in the embodiment of the present invention: a Coverage Improvement Level 1, a Coverage Improvement Level 2 and a Coverage Improvement Level 3 respectively, and the division principles are at least one of the following:

divided into multiple levels according to the different coverage improvement levels required to be supported by the Coverage Improvement MTC UE;

divided into multiple levels according to the different numbers of repeated transmissions of the random access sequences required to be supported by the Coverage Improvement MTC UE; and

divided into multiple levels according to the different repeat times of the Physical Broadcast Channel (PBCH) used when the Coverage Improvement MTC UE decodes successfully the PBCH.

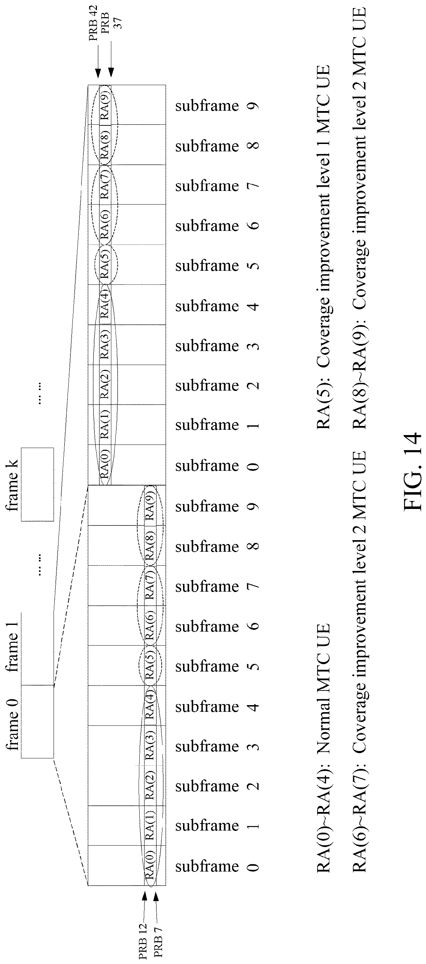

In the embodiment of the present invention, PRACH resources RA(0) ~ RA(4) in the Frame 0 are allocated to the Normal MTC UE; RA(5) is allocated to the MTC UE of the Coverage Improvement Level 1; RA(6) ~ RA(7) are allocated to the MTC UE of the Coverage Improvement Level 2; and RA(8) ~ RA(9) are allocated to the MTC UE of the Coverage Improvement Level 3, as shown in FIG. 14. The PRACH resources are allocated in the similar manner in the Frame 1, Frame 2, ... Frame k....

Wherein, the random access channel configuration information may be configured in at least one of the following:

a System Information Block (SIB);

a Master Information Block (MIB); and

Downlink Control Information (DCI).

Wherein, the random access channel configuration information may be sent in at least one of the following:

a Physical Broadcast Channel (PBCH);

a Physical Downlink Control Channel (PDCCH); and

a Physical Downlink Shared Channel (PDSCH).

(2) The indexes of the starting resources occupied when the MTC UE sends the random access sequences may be obtained in the following manners:

the indexes of the PRACH starting resources allocated to each type of the MTC UE (the Normal MTC UE or the Coverage Improvement Level 1 MTC UE or the Coverage Improvement Level 2 MTC UE or the Coverage Improvement Level 3 MTC UE) are resequenced and then determined based on the following formula:

$$Start^i = \{RAIdx_k^i \mid mod(RAIdx_k^i, RACH\,Re\,pTime_i) = 0\},$$

wherein, $RAIdx_k^i$ is the kth resource after the PRACH starting resources of the MTC UE of the type i are resequenced;

i=0 represents the Normal MTC UE; i=1 represents the Coverage Improvement Level 1 MTC UE; i=2 represents the Coverage Improvement Level 2 MTC UE; i=3 represents the Coverage Improvement Level 3 MTC UE;

RACHRepTime$_i$ is the number of the PRACH starting resources included in the resources occupied by the random access signalings sent by the MTC UE of the type i; and

Start$^i$ is the index of the PRACH starting resources occupied when the MTC UE of the type i sends the random access sequences.

(3) The MTC UE sends the random access signalings on the allocated random access resources;

(4) After the first nodes receive the random access signalings sent by the MTC UE, the first nodes send random access response signalings to the MTC UE to respond to the random access signalings sent by the MTC UE.

Wherein, the random access response information of one or a plurality of the MTC UEs is carried in the random access response signalings; and the type of the MTC UE of the random access response information may be carried in the same random access response signaling, and it is configured by the system or sent to the MTC UE by the first nodes.

In the embodiment of the present invention, it is assumed that the random access response information of two MTC UEs such as the UE1 and theUE2 is carried in the random access response signalings, and both the UE1 and the UE2 belong to the Coverage Improvement Level 2.

In addition to the embodiment of the present invention, the UE1 and UE2 may also belong to different Coverage Improvement Levels, but need to be predefined by the system.

Wherein, the first nodes illustrated are one of the following:

a Macrocell, a Microcell, a Picocell, a Femtocell (also called a home eNode B), a low power node (LPN), a Relay and a Small Cell.

Embodiment 14 of the present invention

In the embodiment of the present invention, a system for configuring random access channel resources includes first nodes and second nodes;

the first nodes are used to send random access channel resource configuration information to the second nodes, the random access channel resource configuration information contains indications of one or a plurality of pieces of random access channel configuration information.

Preferably, the second nodes are one or a plurality of terminals or one or a plurality of terminal groups.

Preferably, the first nodes are at least one of the following:

a Macrocell, a Microcell, a Picocell, a home eNode B, an LPN, a Relay and a Small Cell.

Preferably, the second nodes are used to determine the corresponding random access channel resources according to the random access channel configuration information and send the random access signalings to the first nodes by using the random access channel resources;

the first nodes are also used to send random access response signalings to the second nodes to respond to the random access signalings sent by the second nodes.

The system for configuring random access channel resources provided by the embodiment of the present invention can be combined with a method for configuring random access channel resources provided by the embodiment of the present invention to implement access of the MTC UE in the LTE/A-LTE systems.

The ordinary people skilled in the art may understand that all or part of steps in the embodiments described above can be implemented through flows of the computer programs, and the computer programs can be stored in a computer readable storage medium. The computer programs are executed on the corresponding hardware platforms (such as a system, device, apparatus and component, etc.), and during the execution, one or a combination of the steps in the method embodiments are included.

Optionally, all or part of the steps in the embodiments described above also can be implemented by using integrated circuits. These steps can be made into a plurality of integrated circuit modules respectively or a plurality of modules or steps of them can be made into a single integrated circuit to be implemented. Thus, the present invention is not limited to any combination of hardware and software in a specific form.

Various apparatuses/functional modules/functional units in the embodiments described above, which can be implemented by using general computing apparatuses, can be centralized on a single computing apparatus or distributed on a network formed from a plurality of computing apparatus.

Various apparatuses/functional modules/functional units in the embodiments described above, when implemented in a form of software functional module and sold or used as stand-stone products, can be stored in a computer readable storage medium. The computer readable storage medium mentioned above may be a read-only memory, magnetic disk or optical disk, etc.

Variations or substitutions which may be conceived easily by any person skilled in the art within the technical scope disclosed by the present invention should be all covered within the protect scope of the present invention. Therefore, the protect scope of the present invention should be subject to the protect scope described by the claims.

Industrial Applicability

The embodiments of the present invention provide a method and system for configuring random access channel resources, the first nodes send random access channel resource configuration information to the second nodes, the random access channel resource configuration information contains indications of one or a plurality of pieces of random access channel configuration information, which indicates that the random access channel resources for the second nodes sending the random access signalings, thereby implementing the random access channel resource configuration of the MTC UE in the LTE/LTE-A systems and solving the problem of access of the MTC UE in the LTE/LET-A systems.

**Claims**

1. A method for configuring random access channel resources, comprising:

   first nodes sending random access channel resource configuration information to second nodes, wherein the random access channel resource configuration information is indicated by one or a plurality of pieces of random access channel configuration information;
   wherein, configuration information of first resources is at least comprised in the one or the plurality of pieces of random access channel configuration information, the first resources are one of the following:

   resources used for sending random access signalings and allocated to the second nodes; and
   starting resources used for sending the random access signalings and allocated to the second nodes;

   wherein,the first resources occupy one or a plurality of first time domain measurement units in a time domain and occupy one or a plurality of first frequency domain measurement units in a frequency domain;
   wherein, the configuration information of the first resources comprises at least one of the following:

   configuration index information of the first resources; and
   frequency domain offset information of the first resources; **characterized in that** the random access channel resources are divided into one or a plurality of random access channel resource subsets, the random access channel resources are multiplexed between the random access channel resource subsets by means of time division multiplexing and/or frequency division multiplexing and/or code division multiplexing;

   wherein, when the random access channel resources are multiplexed between the random access channel resource subsets by means of code division multiplexing,
   a random access channel resource subset is formed from at least one predefined random access sequence set;
   wherein, the random access channel resource subset supports one type of the second nodes to transmit the random access sequences,
   the types of the second nodes are divided according to one of the following principles:

   coverage improvement levels required to be supported by the second nodes,
   the number of repeated transmissions of the random access sequences required to be supported by the second nodes,

repeat times of a physical broadcast channel PBCH used when the PBCH is decoded successfully by the second nodes,
repeat times of a master information block MIB message when the MIB message is decoded successfully by the second nodes,
repeat times of a system information block SIB message when the SIB message is decoded successfully by the second nodes, and
repeat times of the MIB message when the PBCH is decoded successfully by the second nodes,
the second nodes are one or a plurality of terminals or one or a plurality of terminal groups, wherein the terminal is MTC UE.

2. The method for configuring the random access channel resources according to claim 1, wherein, the configuration index information of the first resources indicates any one or a plurality of pieces of the following information:

within a predefined time domain period, time domain position distribution information occupied by the first resources within the predefined time domain period, wherein the predefined time domain period is described by using the first time domain measurement units and is configured by a system or sent by the first nodes;
quantity information of the first resources within a predefined time domain period, wherein the predefined time domain period is described by using the first time domain measurement units and is configured by a system or sent by the first nodes;
format information of the random access signalings;
information of whether the first resources support frequency hopping; and
frequency hopping pattern information of the first resources.

3. The method for configuring the random access channel resources according to claim 1, wherein, position information of the first resources in the frequency domain is determined by the frequency domain offset information of the first resources;
or
position information of the first resources in the frequency domain is at least one of the following:

information of a starting resource position of the first resources in the frequency domain;
information of an end resource position of the first resources in the frequency domain; and
information of an occupied resource position of the first resources in the frequency domain.

4. The method for configuring the random access channel resources according to claim 1, wherein, frequency domain position distribution information of the first resources is determined by the frequency domain offset information of the first resources and the configuration index information of the first resources,
wherein, there are a plurality of positions of the first resources in the frequency domain,
positions of a plurality of the first resources in a same time domain position are different in the frequency domain.

5. The method for configuring the random access channel resources according to claim 1, wherein, the one or plurality of pieces of random access channel configuration information further comprises:

frequency domain position distribution spacing information of the first resources,
wherein, frequency domain position distribution information of the first resources is determined by the frequency domain offset information of the first resources, the frequency domain position distribution spacing information of the first resources and the configuration index information of the first resources.

6. The method for configuring the random access channel resources according to claim 1, wherein, when the random access channel resource configuration information is indicated by a plurality of pieces of random access channel configuration information, configuration information of first resources comprised in each piece of the random access channel configuration information is different.

7. The method for configuring the random access channel resources according to claim 1, wherein, when the random access channel resources are multiplexed between the random access channel resource subsets by means of time division multiplexing:

first resources whose time domain positions are within a predefined time domain set in the first resources are allocated to a random access channel resource subset; or,

first resources whose time domain positions are within a predefined time domain set and which have same frequency domain positions in the first resources are allocated to a random access channel resource subset; or, first resources whose time domain positions are within a predefined time domain set and which are at predefined frequency domain positions in the first resources are allocated to a random access channel resource subset, wherein, the predefined time domain set comprises one or a plurality of time domain time points, and the time domain time points are measured by the first time domain measurement units, and the one or the plurality of time domain time points are distributed continuously or discretely in a time domain,

the predefined frequency domain positions are required to meet the following conditions:

frequency domain positions of the first resources on two adjacent time domain time points are different; and/or,

there are N different types of frequency domain positions among the predefined frequency domain positions, and the predefined time domain set is divided into N subsets, the frequency domain positions of the first resources in each subset correspond to one of the predefined frequency domain positions, N is an integer greater than or equal to 1.

8. The method for configuring the random access channel resources according to claim 1, wherein, when the random access channel resources are multiplexed between the random access channel resource subsets by means of frequency division multiplexing,

first resources whose frequency domain positions are within a predefined frequency domain set in the first resources are allocated to a random access channel resource subset; or,

first resources whose frequency domain positions are within a predefined frequency domain set and which are at predefined time domain positions in the first resources are allocated to a random access channel resource subset,

wherein, the predefined frequency domain set comprises one or a plurality of frequency domain points, and the frequency domain points are measured by the first frequency domain measurement units, the one or the plurality of frequency domain points are distributed continuously or discretely in a frequency domain; or

the predefined time domain positions comprise one or a plurality of time domain time points, and the time domain time points are measured by the first time domain measurement units, the one or the plurality of time domain time points are distributed continuously or discretely in a time domain.

9. The method for configuring the random access channel resources according to claim 1, wherein, when the random access channel resources are multiplexed between the random access channel resource subsets by means of time division multiplexing and frequency division multiplexing, the first resources within a predefined set are allocated to a random access channel resource subset,

wherein, elements in the predefined set are one or a plurality of sequenced first resources, a sequencing rule of the first resources is configured by the system.

10. The method for configuring the random access channel resources according to claim 1, wherein, one or a plurality of random access sequences are contained in the predefined random access sequence set.

11. The method for configuring the random access channel resources according to claim 2, wherein, the first nodes are at least one of the following:

a Macrocell, a Microcell, a Picocell, a Femtocell, a low power node LPN, a Relay and a Small Cell.

12. The method for configuring the random access channel resources according to claim2, after the step of the first nodes sending random access channel resource configuration information to the second nodes, further comprising:

the second nodes determining corresponding random access channel resources according to the random access channel configuration information and sending random access signalings to the first nodes by using the random access channel resources.

13. The method for configuring the random access channel resources according to claim 12, after the step of the second nodes determining the corresponding random access channel resources according to the random access channel configuration information and sending the random access signalings to the first nodes by using the random access channel resources, further comprising:

the first nodes sending random access response signalings to the second nodes to respond to the random access signalings sent by the second nodes.

14. The method for configuring the random access channel resources according to claim 13, wherein, random access response information of one or a plurality of the second nodes is carried in the random access response signalings.

15. The method for configuring the random access channel resources according to claim 14, wherein, the one or the plurality of the second nodes are configured by the system or the first nodes;
or
the one or the plurality of the second nodes have any one or a plurality of the following properties:

    the one or the plurality of the second nodes belong to the same type,
    coverage improvement levels required to be supported by the one or the plurality of the second nodes are same,
    the number of repeated transmissions of the random access sequences required to be supported by the one or the plurality of the second nodes are same, and
    RA-RNTIs calculated by the one or the plurality of the second nodes are same;
    or
    the types of the one or the plurality of the second nodes are configured by a system;
    the coverage improvement levels required to be supported by the one or the plurality of the second nodes are configured by the system; and
    the number of repeated transmissions of the random access sequences required to be supported by the one or the plurality of the second nodes are configured by the system.

16. The method for configuring the random access channel resources according to claim 13, wherein, information of the number of repeated transmissions of the random access response signalings is indicated by the first nodes, wherein, the first nodes indicate the information of the number of repeated transmissions of the random access response signalings in at least one of the following manners:

    indicating the information of the number of repeated transmissions of the random access response signalings in downlink control information;
    a mapping relationship existing between information of maximum repeat times supported by a PBCH sent by the first nodes and the information of the number of repeated transmissions of the random access response signalings;
    a mapping relationship existing between information of maximum repeat times supported by MIB information sent by the first nodes and the information of the number of repeated transmissions of the random access response signalings;
    a mapping relationship existing between information of maximum repeat times supported by SIB information sent by the first nodes and the information of the number of repeated transmissions of the random access response signalings;
    a mapping relationship existing between information of repeat times supported by the PBCH and the information of the number of repeated transmissions of the random access response signalings;
    a mapping relationship existing between information of repeat times supported by the MIB and the information of the number of repeated transmissions of the random access response signalings; and
    a mapping relationship existing between information of repeat times supported by the SIB and the information of the number of repeated transmissions of the random access response signalings;
    or
    the information of the number of repeated transmissions of the random access response signalings is indicated by the types of the second nodes or the coverage improvement levels or the supported number of repeated transmissions of the random access sequences.

17. A system for configuring random access channel resources, comprising first nodes and second nodes; wherein, the first nodes are configured to: send random access channel resource configuration information to the second nodes, wherein the random access channel resource configuration information contains indications of one or a plurality of pieces of random access channel configuration information;
wherein, configuration information of first resources is at least comprised in the one or the plurality of pieces of random access channel configuration information, the first resources are one of the following:

    resources used for sending random access signalings and allocated to the second nodes; and
    starting resources used for sending the random access signalings and allocated to the second nodes;
    wherein, the first resources occupy one or a plurality of first time domain measurement units in a time domain and occupy one or a plurality of first frequency domain measurement units in a frequency domain;

wherein, the configuration information of the first resources comprises at least one of the following:

configuration index information of the first resources; and

frequency domain offset information of the first resources; **characterized in that** the random access channel resources are divided into one or a plurality of random access channel resource subsets, the random access channel resources are multiplexed between the random access channel resource subsets by means of time division multiplexing and/or frequency division multiplexing and/or code division multiplexing;

wherein, when the random access channel resources are multiplexed between the random access channel resource subsets by means of code division multiplexing,

a random access channel resource subset is formed from at least one predefined random access sequence set;

wherein, the random access channel resource subset supports one type of the second nodes to transmit the random access sequences,

the types of the second nodes are divided according to one of the following principles:

coverage improvement levels required to be supported by the second nodes,

the number of repeated transmissions of the random access sequences required to be supported by the second nodes,

repeat times of a physical broadcast channel PBCH used when the PBCH is decoded successfully by the second nodes,

repeat times of a master information block MIB message when the MIB message is decoded successfully by the second nodes,

repeat times of a system information block SIB message when the SIB message is decoded successfully by the second nodes, and

repeat times of the MIB message when the PBCH is decoded successfully by the second nodes,

the second nodes are one or a plurality of terminals or one or a plurality of terminal groups, wherein the terminal is MTC UE.

**Patentansprüche**

1. Ein Verfahren zum Konfigurieren von Direktzugriffskanalressourcen, das Folgendes umfasst:

das Senden, durch erste Knoten, von Direkzugriffskanalressourcen-Konfigurationsinformationen an zweite Knoten, wobei die Direktzugriffskanalressourcen-Konfigurationsinformationen durch ein oder eine Vielzahl von Teilen von DirektzugriffskanalKonfigurationsinformationen geliefert werden;

wobei Konfigurationsinformationen erster Ressourcen mindestens in dem einen oder der Vielzahl von Teilen von DirektzugriffskanalKonfigurationsinformationen umfasst sind; die ersten Ressourcen sind eines von Folgendem:

Ressourcen, die zum Senden von Direktzugriffssignalen verwendet werden und den zweiten Knoten zugewiesen sind; und

Startressourcen, die zum Senden der Direktzugriffssignale verwendet werden und den zweiten Knoten zugewiesen sind;

wobei die ersten Ressourcen eine oder eine Vielzahl erster Zeitbereichmesseinheiten in einem Zeitbereich einnehmen und eine oder eine Vielzahl erster Frequenzbereichmesseinheiten in einem Frequenzbereich einnehmen;

wobei die Konfigurationsinformationen der ersten Ressourcen mindestens eines von Folgendem umfassen:

Konfigurationsindexinformationen der ersten Ressourcen; und

Frequenzbereich-Offsetinformationen der ersten Ressourcen;

**dadurch gekennzeichnet, dass**

die Direktzugriffskanalressourcen in eine oder eine Vielzahl von Direktzugriffskanalressourcen-Teilmengen unterteilt sind; die Direktzugriffskanalressourcen werden zwischen den Direktzugriffskanalressourcen-Teilmengen multiplexiert durch Zeitmultiplexing und/oder Frequenzmultiplexing und/oder Codemultiplexing;

wobei, wenn die Direktzugriffskanalressourcen zwischen den Direktzugriffskanalressourcen-Teilmengen durch Codemultiplexing multiplexiert werden,

eine Direktzugriffskanalressourcen-Teilmenge aus mindestens einer vordefinierten Direktzugriffs-Sequenzfolge gebildet wird;

wobei die Direktzugriffskanalressourcen-Teilmenge einen Typ der zweiten Knoten enthält, um die Direktzugriffs-Sequenzen zu übertragen;

die Typen zweiter Knoten sind nach einem der folgenden Grundsätze unterteilt:

Versorgungsverbesserungs-Grade, die von den zweiten Knoten unterstützt werden müssen,

die Anzahl wiederholter Übertragungen der Direktzugriffs-Sequenzen, die von den zweiten Knoten unterstützt werden müssen;

Anzahl der Wiederholungen eines Physical Broadcast Channel - PBCH - , die verwendet werden, wenn der PBCH erfolgreich von den zweiten Knoten decodiert wird,

Anzahl der Wiederholungen einer Master Information Block-, MIB-,Nachricht, wenn die MIB-Nachricht erfolgreich von den zweiten Knoten decodiert wird, Anzahl der Wiederholungen einer System Information Block-, SIB-,Nachricht, wenn die SIB-Nachricht erfolgreich von den zweiten Knoten decodiert wird, und Anzahl der Wiederholungen der MIB-Nachricht, wenn der PBCH erfolgreich von den zweiten Knoten decodiert wird,

die zweiten Knoten sind ein oder eine Vielzahl von Endgeräten oder eine oder eine Vielzahl von Endgerätegruppen, wobei das Endgerät MTC UE ist.

2. Das Verfahren zum Konfigurieren der Direktzugriffskanalressourcen gemäß Anspruch 1, wobei die Konfigurationsindexinformationen der ersten Ressourcen eine oder eine Vielzahl der folgenden Informationen angeben:

innerhalb einer vordefinierten Zeitbereichsperiode, Zeitbereichspositions-Verteilungsinformationen, die von den ersten Ressourcen innerhalb der vordefinierten Zeitbereichsperiode eingenommen werden, wobei die vordefinierte Zeitbereichsperiode mit Hilfe der ersten Zeitbereichsmesseinheiten beschrieben und von einem System konfiguriert oder von den ersten Knoten gesendet wird;

Mengeninformationen der ersten Ressourcen innerhalb einer vordefinierten Zeitbereichsperiode, wobei die vordefinierte Zeitbereichsperiode mit Hilfe der ersten Zeitbereichsmesseinheiten beschrieben und von einem System konfiguriert oder von den ersten Knoten gesendet wird;

Formatinformationen der Direktzugriffssignale;

Informationen darüber, ob die ersten Ressourcen Frequenzspringen unterstützen; und

Frequenzspringmusterinformationen der ersten Ressourcen.

3. Das Verfahren zum Konfigurieren der Direktzugriffskanalressourcen gemäß Anspruch 1, wobei Positionsinformationen der ersten Ressourcen im Frequenzbereich durch die Frequenzbereich-Offsetinformationen der ersten Ressourcen bestimmt werden;

oder

Positionsinformationen der ersten Ressourcen im Frequenzbereich mindestens eines von Folgendem sind:

Informationen über eine Ausgangs-Ressourcenposition der ersten Ressourcen im Frequenzbereich;

Informationen über eine End-Ressourcenposition der ersten Ressourcen im Frequenzbereich; und

Informationen über eine besetzte Ressourcenposition der ersten Ressourcen im Frequenzbereich.

4. Das Verfahren zum Konfigurieren der Direktzugriffskanalressourcen gemäß Anspruch 1, wobei die Frequenzbereichspositionsverteilungsinformationen der ersten Ressourcen anhand der Frequenzbereich-Offsetinformationen der ersten Ressourcen und der Konfigurationsindexinformationen der ersten Ressourcen ermittelt werden,

wobei sich eine Vielzahl von Positionen der ersten Ressourcen im Frequenzbereich befinden,

Positionen einer Vielzahl der ersten Ressourcen in einer selben Zeitbereichsposition unterscheiden sich im Frequenzbereich.

5. Das Verfahren zum Konfigurieren der Direktzugriffskanalressourcen gemäß Anspruch 1,

wobei der eine oder die Vielzahl von Teilen von Direktzugriffskanalkonfigurationsinformationen weiter Folgendes umfassen:

EP 3 032 910 B1

Frequenzbereichspositionsverteilungsabstandsinformationen der ersten Ressourcen,
wobei die Frequenzbereichspositionsverteilungsinformationen der ersten Ressourcen bestimmt werden durch die Frequenzbereich-Offsetinformationen der ersten Ressourcen, die Frequenzbereichspositionsverteilungsabstandsinformationen der ersten Ressourcen und die Konfigurationsindexinformationen der ersten Ressourcen.

6. Das Verfahren zum Konfigurieren der Direktzugriffskanalressourcen gemäß Anspruch 1, wobei, wenn die Direktzugriffskanalressourcenkonfigurationsinformationen durch eine Vielzahl von Teilen von Direktzugriffskanalkonfigurationsinformationen geliefert werden, die Konfigurationsinformationen erster Ressourcen, die in jedem Teil der Direktzugriffskanalkonfigurationsinformationen umfasst sind, sich unterscheiden.

7. Das Verfahren zum Konfigurieren der Direktzugriffskanalressourcen gemäß Anspruch 1, wobei, wenn die Direktzugriffskanalressourcen zwischen den Direktzugriffskanalressourcen-Teilmengen durch Zeitmultiplexing multiplexiert werden,
erste Ressourcen, deren Zeitbereichspositionen sich innerhalb einer vordefinierten Zeitbereichs-Menge in den ersten Ressourcen befinden, einer Direktzugriffskanalressourcen-Teilmenge zugeordnet werden; oder
erste Ressourcen, deren Zeitbereichspositionen sich innerhalb einer vordefinierten Zeitbereichs-Menge befinden und dieselben Frequenzbereichspositionen innerhalb der ersten Ressourcen haben, einer Direktzugriffskanalressourcen-Teilmenge zugeordnet werden; oder
erste Ressourcen, deren Zeitbereichspositionen sich innerhalb einer vordefinierten Zeitbereichs-Menge befinden und die an vordefinierten Frequenzbereichspositionen innerhalb der ersten Ressourcen liegen, einer Direktzugriffskanalressourcen-Teilmenge zugeordnet werden,
wobei die vordefinierte Zeitbereichs-Menge einen oder eine Vielzahl von Zeitbereichs-Zeitpunkten umfasst und die Zeitbereichs-Zeitpunkte anhand der ersten Zeitbereichsmesseinheiten gemessen werden und der eine oder die Vielzahl von Zeitbereichs-Zeitpunkten kontinuierlich oder diskret in einem Zeitbereich verteilt sind;
die vordefinierten Frequenzbereichspositionen müssen folgende Bedingungen erfüllen:
die Frequenzbereichspositionen der ersten Ressourcen an zwei benachbarten Zeitbereichs-Zeitpunkten sind unterschiedlich; und/oder es gibt N verschiedene Arten von Frequenzbereichspositionen unter den vordefinierten Frequenzbereichspositionen, und die vordefinierte Zeitbereichs-Menge ist in N Teilmengen unterteilt; die Frequenzbereichspositionen der ersten Ressourcen in jeder Teilmenge entsprechen einer der vordefinierten Frequenzbereichspositionen; N ist eine ganze Zahl größer als oder gleich 1.

8. Das Verfahren zum Konfigurieren der Direktzugriffskanalressourcen gemäß Anspruch 1, wobei, wenn die Direktzugriffskanalressourcen zwischen den Direktzugriffskanalressourcen-Teilmengen durch Frequenzmultiplexing multiplexiert werden,
erste Ressourcen, deren Frequenzbereichspositionen sich innerhalb einer vordefinierten Frequenzbereichs-Menge in den ersten Ressourcen befinden, einer Direktzugriffskanalressourcen-Teilmenge zugewiesen werden; oder
erste Ressourcen, deren Frequenzbereichspositionen sich innerhalb einer vordefinierten Frequenzbereichs-Menge befinden und an vordefinierten Zeitbereichspositionen innerhalb der ersten Ressourcen liegen, einer Direktzugriffskanalressourcen-Teilmenge zugeordnet werden,
wobei die vordefinierte Frequenzbereichs-Menge einen oder eine Vielzahl von Frequenzbereichspunkten umfasst und die Frequenzbereichspunkte anhand der ersten Frequenzbereichsmesseinheiten gemessen werden; der eine oder die Vielzahl von Frequenzbereichspunkten sind kontinuierlich oder diskret in einem Frequenzbereich verteilt; oder
die vordefinierten Zeitbereichspositionen umfassen einen oder eine Vielzahl von Zeitbereichs-Zeitpunkten und die Zeitbereichs-Zeitpunkte werden anhand der ersten Zeitbereichs-Messeinheiten gemessen; der eine oder die Vielzahl von Zeitbereichs-Zeitpunkten sind kontinuierlich oder diskret in einem Zeitbereich verteilt.

9. Das Verfahren zum Konfigurieren der Direktzugriffskanalressourcen gemäß Anspruch 1, wobei, wenn die Direktzugriffskanalressourcen zwischen den Direktzugriffskanalressourcen-Teilmengen durch Zeitmultiplexing und Frequenzmultiplexing multiplexiert werden, die ersten Ressourcen innerhalb einer vordefinierten Menge einer Direktzugriffskanalressourcen-Teilmenge zugeordnet werden,
wobei Elemente in der vordefinierten Menge eine oder eine Vielzahl von sequenzierten ersten Ressourcen sind; eine Sequenzierungsregel der ersten Ressourcen wird vom System konfiguriert.

10. Das Verfahren zum Konfigurieren der Direktzugriffskanalressourcen gemäß Anspruch 1, wobei eine oder eine Vielzahl von Direktzugriffssequenzen in der vordefinierten Direktzugriffssequenz-Menge enthalten sind.

44

**11.** Das Verfahren zum Konfigurieren der Direkzugriffskanalressourcen gemäß Anspruch 2, wobei die ersten Knoten mindestens eines von Folgendem sind:

eine Makrozelle; eine Mikrozelle; eine Pikozelle; eine Femtozelle; ein Niedrigenergieknoten, Low Power Node - LPN -, ein Relais und eine Small Cell.

**12.** Das Verfahren zum Konfigurieren der Direktzugriffskanalressourcen gemäß Anspruch 2, nach dem Schritt des Sendens von Direktzugriffskanalressourcenkonfigurationsinformationen an die zweiten Knoten durch die ersten Knoten; weiter Folgendes umfassend:

das Ermitteln, durch die zweiten Knoten, entsprechender Direktzugriffskanalressourcen nach den Direktzugriffskanalkonfigurationsinformationen und das Senden von Direktzugriffssignalen an die ersten Knoten mit Hilfe der Direktzugriffskanalressourcen.

**13.** Das Verfahren zum Konfigurieren der Direktzugriffskanalressourcen gemäß Anspruch 12, das nach dem Schritt des Ermittelns, durch die zweiten Knoten, der entsprechenden Direktzugriffskanalressourcen nach den Direktzugriffskanalkonfigurationsinformationen und dem Senden von Direktzugriffssignalen an die ersten Knoten mit Hilfe der Direktzugriffskanalressourcen weiter Folgendes umfasst:

das Senden, durch die ersten Knoten, von Direktzugriffsantwortsignalen an die zweiten Knoten, um auf die Direktzugriffssignale zu antworten, die von den zweiten Knoten gesendet wurden.

**14.** Das Verfahren zum Konfigurieren der Direktzugriffskanalressourcen gemäß Anspruch 13, wobei Direktzugriffsantwortinformationen eines oder einer Vielzahl der zweiten Knoten in den Direktzugriffsantwortsignalen enthalten sind.

**15.** Das Verfahren zum Konfigurieren der Direktzugriffskanalressourcen gemäß Anspruch 14, wobei der eine oder die Vielzahl der zweiten Knoten von dem System oder den ersten Knoten konfiguriert werden;
oder
der eine oder die Vielzahl der zweiten Knoten eine beliebige oder eine Vielzahl der folgenden Eigenschaften haben:

der eine oder die Vielzahl der zweiten Knoten gehören zum selben Typ, Versorgungsverbesserungs-Grade, die von dem einen oder der Vielzahl der zweiten Knoten unterstützt werden müssen, sind gleich, die Anzahl wiederholter Übertragungen der Direktzugriffssequenzen, die von dem einen oder der Vielzahl der zweiten Knoten unterstützt werden müssen, ist gleich, und RA-RNTIs, die von dem einen oder der Vielzahl der zweiten Knoten berechnet werden, sind gleich; oder

die Typen des einen oder der Vielzahl der zweiten Knoten werden von einem System konfiguriert; die Versorgungsverbesserungsgrade, die von dem einen oder der Vielzahl der zweiten Knoten unterstützt werden müssen, werden vom System konfiguriert; und die Anzahl wiederholter Übertragungen der Direktzugriffssequenzen, die von dem einen oder der Vielzahl der zweiten Knoten unterstützt werden müssen, wird vom System konfiguriert.

**16.** Das Verfahren zum Konfigurieren der Direktzugriffskanalressourcen gemäß Anspruch 13, wobei Informationen über die Anzahl wiederholter Übertragungen der Direktzugriffsantwortsignale von den ersten Knoten geliefert werden, wobei die ersten Knoten die Informationen über die Anzahl wiederholter Übertragungen der Direktzugriffsantwortsignale auf mindestens eine der folgenden Arten liefern:

Angabe der Informationen über die Anzahl wiederholter Übertragungen der Direktzugriffsantwortsignale in Abwärtsrichtungs-Steuerungsinformationen;
eine Abbildungsbeziehung, die zwischen Informationen über die maximale Anzahl von Wiederholungen, die von einem PBCH unterstützt und von den ersten Knoten gesendet werden, und den Informationen über die Anzahl wiederholter Übertragungen der Direktzugriffsantwortsignale existiert;
eine Abbildungsbeziehung, die zwischen Informationen über die maximale Anzahl von Wiederholungen, die von MIB-Informationen unterstützt werden, gesendet von den ersten Knoten, und den Informationen über die Anzahl wiederholter Übertragungen der Direktzugriffsantwortsignale existiert;
eine Abbildungsbeziehung, die zwischen Informationen über die maximale Anzahl von Wiederholungen, die von SIB-Informationen unterstützt werden, gesendet von den ersten Knoten, und den Informationen über die Anzahl wiederholter Übertragungen der Direktzugriffsantwortsignale existiert;
eine Abbildungsbeziehung, die zwischen Informationen über die Anzahl von Wiederholungen, die vom PBCH unterstützt werden, und den Informationen über die Anzahl wiederholter Übertragungen der Direktzugriffsantwortsignale existiert;

eine Abbildungsbeziehung, die zwischen Informationen über die Anzahl von Wiederholungen, die vom MIB unterstützt werden, und den Informationen über die Anzahl wiederholter Übertragungen der Direktzugriffsantwortsignale existiert; und

eine Abbildungsbeziehung, die zwischen Informationen über die Anzahl von Wiederholungen, die vom SIB unterstützt werden, und den Informationen über die Anzahl wiederholter Übertragungen der Direktzugriffsantwortsignale existiert;

oder

die Informationen über die Anzahl wiederholter Übertragungen der Direktzugriffsantwortsignale werden geliefert von den Typen der zweiten Knoten oder den Versorgungsverbesserungsgraden oder der unterstützten Anzahl wiederholter Übertragungen der Direktzugriffssequenzen.

17. Ein System zum Konfigurieren von Direktzugriffskanalressourcen, das erste Knoten und zweite Knoten umfasst; wobei

die ersten Knoten konfiguriert sind, um: Direktzugriffskanalressourcenkonfigurationsinformationen an die zweiten Knoten zu senden, wobei die Direktzugriffskanalressourcenkonfigurationsinformationen Angaben über ein oder eine Vielzahl von Teilen von Direktzugriffskanalkonfigurationsinformationen enthalten;

wobei Konfigurationsinformationen erster Ressourcen mindestens in dem einen oder der Vielzahl von Teilen von Direktzugriffskanalkonfigurationsinformationen umfasst sind; die ersten Ressourcen sind eines von Folgendem:

Ressourcen, die genutzt werden, um Direktzugriffssignale zu senden, und den zweiten Knoten zugeordnet sind; und

Startressourcen, die zum Senden der Direktzugriffssignale genutzt werden und den zweiten Knoten zugeordnet sind;

wobei die ersten Ressourcen eine oder eine Vielzahl von ersten Zeitbereichsmesseinheiten in einem Zeitbereich einnehmen und eine oder eine Vielzahl von ersten Frequenzbereichsmesseinheiten in einem Frequenzbereich einnehmen;

wobei die Konfigurationsinformationen der ersten Ressourcen mindestens eines von Folgendem umfassen:

Konfigurationsindexinformationen der ersten Ressourcen; und
Frequenzbereich-Offsetinformationen der ersten Ressourcen,

**dadurch gekennzeichnet, dass**

die Direktzugriffskanalressourcen in eine oder eine Vielzahl von Direktzugriffskanalressourcen-Teilmengen unterteilt sind; die Direktzugriffskanalressourcen werden zwischen den Direktzugriffskanalressourcen-Teilmengen durch Zeitmultiplexing und/oder Frequenzmultiplexing und/oder Codemultiplexing multiplexiert;

wobei, wenn die Direktzugriffskanalressourcen zwischen den Direktzugriffskanalressourcen-Teilmengen durch Codemultiplexing multiplexiert werden,

eine Direktzugriffskanalressourcen-Teilmenge aus mindestens einer vordefinierten Direktzugriffs-Sequenzfolge gebildet wird;

wobei die Direktzugriffskanalressourcen-Teilmenge einen Typ zweiter Knoten unterstützt, um die Direktzugriffssequenzen zu übertragen,

die Typen zweiter Knoten sind nach einem der folgenden Grundsätze unterteilt:

Versorgungsverbesserungs-Grade, die von den zweiten Knoten unterstützt werden müssen,

die Anzahl wiederholter Übertragungen der Direktzugriffs-Sequenzen, die von den zweiten Knoten unterstützt werden müssen;

Wiederholungszeiten eines Physical Broadcast Channel PBCH, die verwendet werden, wenn der PBCH erfolgreich von den zweiten Knoten decodiert wird, Anzahl der Wiederholungen einer Master Information Block-, MIB-,Nachricht, wenn die MIB-Nachricht erfolgreich von den zweiten Knoten decodiert wird, Anzahl der Wiederholungen einer System Information Block-, SIB-,Nachricht, wenn die SIB-Nachricht erfolgreich von den zweiten Knoten decodiert wird, und

Anzahl der Wiederholungen der MIB-Nachricht, wenn der PBCH erfolgreich von den zweiten Knoten decodiert wird,

die zweiten Knoten sind ein oder eine Vielzahl von Endgeräten oder eine oder eine Vielzahl von Endgerätegruppen, wobei das Endgerät MTC UE ist.

**Revendications**

1. Procédé pour configurer des ressources de canal d'accès aléatoire, comprenant l'étape suivante :

des premier noeuds envoient des informations de configuration de ressources de canal d'accès aléatoire à des seconds noeuds, les informations de configuration de ressources de canal d'accès aléatoire étant indiquées par un ou plusieurs éléments d'informations de configuration de canal d'accès aléatoire ;
des informations de configuration de premières ressources étant au moins comprises dans lesdits un ou plusieurs éléments d'informations de configuration de canal d'accès aléatoire, les premières ressources étant :

soit des ressources utilisées pour envoyer des signalisations d'accès aléatoire et attribuées aux seconds noeuds ;
soit des ressources de départ utilisées pour envoyer les signalisations d'accès aléatoire et attribuées aux seconds noeuds ;
les premières ressources occupant une ou plusieurs premières unités de mesure temporelles dans le domaine temporel et occupant une ou plusieurs premières unités de mesure fréquentielles dans le domaine fréquentiel ;
les informations de configuration des premières ressources comprenant :

des informations d'indice de configuration des premières ressources ; et/ou
des informations de décalage fréquentiel des premières ressources ;

**caractérisé en ce que** les ressources de canal d'accès aléatoire sont divisées en un ou plusieurs sous-ensembles de ressources de canal d'accès aléatoire, les ressources de canal d'accès aléatoire étant multiplexées entre les sous-ensembles de ressources de canal d'accès aléatoire au moyen d'un multiplexage par répartition temporelle et/ou d'un multiplexage par répartition fréquentielle et/ou d'un multiplexage par répartition en code ;
dans lequel, quand les ressources de canal d'accès aléatoire sont multiplexées entre les sous-ensembles de ressources de canal d'accès aléatoire au moyen d'un multiplexage par répartition en code,
un sous-ensemble de ressources de canal d'accès aléatoire est formé à partir d'au moins un ensemble de séquences d'accès aléatoire prédéfini ;
le sous-ensemble de ressources de canal d'accès aléatoire prenant en charge un type des seconds noeuds pour émettre les séquences d'accès aléatoire,
les seconds noeuds étant divisés en types selon l'un des principes suivants :

par niveaux d'amélioration de couverture devant être pris en charge par les seconds noeuds,
par nombre d'émissions répétées des séquences d'accès aléatoire devant être pris en charge par les seconds noeuds,
par nombre de répétitions d'un canal de diffusion physique, PBCH, utilisé quand le PBCH est décodé avec succès par les seconds noeuds,
par nombre de répétitions d'un message de bloc d'informations maître, MIB, quand le message MIB est décodé avec succès par les seconds noeuds,
par nombre de répétitions d'un message de bloc d'informations système, SIB, quand le message SIB est décodé avec succès par les seconds noeuds, et
par nombre de répétitions du message MIB quand le PBCH est décodé avec succès par les seconds noeuds,

les seconds noeuds étant un ou plusieurs terminaux ou un ou plusieurs groupes de terminaux, le terminal étant un équipement utilisateur de communication du type machine, UE MTC.

2. Procédé pour configurer des ressources de canal d'accès aléatoire selon la revendication 1, dans lequel les informations d'indice de configuration des premières ressources indiquent un ou plusieurs éléments quelconques des informations suivantes :

à l'intérieur d'une période temporelle prédéfinie, des informations de distribution de positions temporelles occupées par les premières ressources à l'intérieur de la période temporelle prédéfinie, la période temporelle prédéfinie étant décrite à l'aide des premières unités de mesure temporelles et étant configurée par un système ou envoyée par les premiers noeuds ;

des informations de quantité des premières ressources à l'intérieur d'une période temporelle prédéfinie, la période temporelle prédéfinie étant décrite à l'aide des premières unités de mesure temporelles et étant configurée par un système ou envoyée par les premiers noeuds ;

des informations de format des signalisations d'accès aléatoire ;

des informations indiquant si les premières ressources prennent en charge un saut de fréquence ; et

des informations de plan de saut de fréquence des premières ressources.

3. Procédé pour configurer des ressources de canal d'accès aléatoire selon la revendication 1, dans lequel des informations de position des premières ressources dans le domaine fréquentiel sont déterminées par les informations de décalage fréquentiel des premières ressources ;

ou

des informations de position des premières ressources dans le domaine fréquentiel sont :

des informations d'une position de ressource de départ des premières ressources dans le domaine fréquentiel ; et/ou

des informations d'une position de ressource finale des premières ressources dans le domaine fréquentiel ; et/ou

des informations d'une position de ressource occupée des premières ressources dans le domaine fréquentiel.

4. Procédé pour configurer des ressources de canal d'accès aléatoire selon la revendication 1, dans lequel des informations de distribution de positions fréquentielles des premières ressources sont déterminées par les informations de décalage fréquentiel des premières ressources et les informations d'indice de configuration des premières ressources,

dans lequel il existe une pluralité de positions des premières ressources dans le domaine fréquentiel,

les positions d'une pluralité des premières ressources dans une même position temporelle étant différentes dans le domaine fréquentiel.

5. Procédé pour configurer des ressources de canal d'accès aléatoire selon la revendication 1, dans lequel lesdits un ou plusieurs éléments d'informations de configuration de canal d'accès aléatoire comprennent en outre :

des informations d'espacement de distribution de positions fréquentielles des premières ressources,

les informations de distribution de positions fréquentielles des premières ressources étant déterminées par les informations de décalage fréquentiel des premières ressources, les informations d'espacement de distribution de positions fréquentielles des premières ressources et les informations d'indice de configuration des premières ressources.

6. Procédé pour configurer des ressources de canal d'accès aléatoire selon la revendication 1, dans lequel, quand les informations de configuration de ressources de canal d'accès aléatoire sont indiquées par une pluralité d'éléments d'informations de configuration de canal d'accès aléatoire, des informations de configuration de premières ressources comprises dans chaque élément des informations de configuration de canal d'accès aléatoire sont différentes.

7. Procédé pour configurer des ressources de canal d'accès aléatoire selon la revendication 1, dans lequel, quand les ressources de canal d'accès aléatoire sont multiplexées entre les sous-ensembles de ressources de canal d'accès aléatoire au moyen d'un multiplexage par répartition temporelle :

des premières ressources dont les positions temporelles sont à l'intérieur d'un ensemble temporel prédéfini dans les premières ressources sont attribuées à un sous-ensemble de ressources de canal d'accès aléatoire ; ou,

des premières ressources dont les positions temporelles sont à l'intérieur d'un ensemble temporel prédéfini et qui ont les mêmes positions fréquentielles dans les premières ressources sont attribuées à un sous-ensemble de ressources de canal d'accès aléatoire ; ou,

des premières ressources dont les positions temporelles sont à l'intérieur d'un ensemble temporel prédéfini et qui sont à des positions fréquentielles prédéfinies dans les premières ressources sont attribuées à un sous-ensemble de ressources de canal d'accès aléatoire,

l'ensemble temporel prédéfini comprenant un ou plusieurs points temporels, les points temporels étant mesurés par les premières unités de mesure temporelles, et lesdits un ou plusieurs points temporels étant distribués de façon continue ou discrète dans le domaine temporel,

les positions fréquentielles prédéfinies devant satisfaire aux conditions suivantes :

les positions fréquentielles des premières ressources sur deux points temporels adjacents sont différentes ; et/ou

il existe N différents types de positions fréquentielles parmi les positions fréquentielles prédéfinies, et l'ensemble temporel prédéfini est divisé en N sous-ensembles, les positions fréquentielles des premières ressources dans chaque sous-ensemble correspondant à l'une des positions fréquentielles prédéfinies, N étant un entier supérieur ou égal à 1.

8. Procédé pour configurer des ressources de canal d'accès aléatoire selon la revendication 1, dans lequel, quand les ressources de canal d'accès aléatoire sont multiplexées entre les sous-ensemble de ressources de canal d'accès aléatoire au moyen d'un multiplexage par répartition fréquentielle,
des premières ressources dont les positions fréquentielles sont à l'intérieur d'un ensemble fréquentiel prédéfini dans les premières ressources sont attribuées à un sous-ensemble de ressources de canal d'accès aléatoire ; ou,
des premières ressources dont les positions fréquentielles sont à l'intérieur d'un ensemble fréquentiel prédéfini et qui sont à des positions temporelles prédéfinies dans les premières ressources sont attribuées à un sous-ensemble de ressources de canal d'accès aléatoire,

l'ensemble fréquentiel prédéfini comprenant un ou plusieurs points fréquentiels, les points fréquentiels étant mesurés par les premières unités de mesure fréquentielles, et lesdits un ou plusieurs points fréquentiels étant distribués de façon continue ou discrète dans le domaine fréquentiel ;
ou
les positions temporelles prédéfinies comprenant un ou plusieurs points temporels, les points temporels étant mesurés par les premières unités de mesure temporelles, et lesdits un ou plusieurs points temporels étant distribués de façon continue ou discrète dans le domaine temporel.

9. Procédé pour configurer des ressources de canal d'accès aléatoire selon la revendication 1, dans lequel, quand les ressources de canal d'accès aléatoire sont multiplexées entre les sous-ensembles de ressources de canal d'accès aléatoire au moyen d'un multiplexage par répartition temporelle et d'un multiplexage par répartition fréquentielle, les premières ressources à l'intérieur d'un ensemble prédéfini sont attribuées à un sous-ensemble de ressources de canal d'accès aléatoire,
les éléments dans l'ensemble prédéfini étant une ou plusieurs premières ressources séquencées, une règle de séquencement des premières ressources étant configurée par le système.

10. Procédé pour configurer des ressources de canal d'accès aléatoire selon la revendication 1, dans lequel une ou plusieurs séquences d'accès aléatoire sont contenues dans l'ensemble de séquences d'accès aléatoire prédéfini.

11. Procédé pour configurer des ressources de canal d'accès aléatoire selon la revendication 2, dans lequel les premiers noeuds sont au moins une entité parmi :
une macrocellule, une microcellule, une picocellule, une femtocellule, un noeud basse puissance (LPN), un relais et une petite cellule.

12. Procédé pour configurer des ressources de canal d'accès aléatoire selon la revendication 2, comprenant en outre, après l'étape à laquelle les premiers noeuds envoient des informations de configuration de ressources de canal d'accès aléatoire aux seconds noeuds, l'étape suivante :
les seconds noeuds déterminent des ressources de canal d'accès aléatoire correspondantes conformément aux informations de configuration de canal d'accès aléatoire et envoient des signalisations d'accès aléatoire aux premiers noeuds à l'aide des ressources de canal d'accès aléatoire.

13. Procédé pour configurer des ressources de canal d'accès aléatoire selon la revendication 12, comprenant en outre, après l'étape à laquelle les seconds noeuds déterminent les ressources de canal d'accès aléatoire correspondantes conformément aux informations de configuration de canal d'accès aléatoire et envoient les signalisations d'accès aléatoire aux premiers noeuds à l'aide des ressources de canal d'accès aléatoire, l'étape suivante :
les premiers noeuds envoient des signalisations de réponse d'accès aléatoire aux seconds noeuds pour répondre aux signalisations d'accès aléatoire envoyées par les seconds noeuds.

14. Procédé pour configurer des ressources de canal d'accès aléatoire selon la revendication 13, dans lequel des informations de réponse d'accès aléatoire d'un ou plusieurs des seconds noeuds sont transportées dans les signalisations de réponse d'accès aléatoire.

15. Procédé pour configurer des ressources de canal d'accès aléatoire selon la revendication 14, dans lequel lesdits un ou plusieurs des seconds noeuds sont configurés par le système ou les premiers noeuds ;
ou
lesdits un ou plusieurs des seconds noeuds possèdent une ou plusieurs propriétés quelconques parmi les propriétés suivantes :

lesdits un ou plusieurs des seconds noeuds appartiennent au même type,
des niveaux d'amélioration de couverture devant être pris en charge par lesdits un ou plusieurs des seconds noeuds sont les mêmes,
les nombres d'émissions répétées des séquences d'accès aléatoire devant être pris en charge par lesdits un ou plusieurs des seconds noeuds sont les mêmes, et
des identifiants temporaires de réseau radio pour l'accès aléatoire, RA-RNTI, calculés par lesdits un ou plusieurs des seconds noeuds sont les mêmes ;
ou
les types desdits un ou plusieurs des seconds noeuds sont configurés par un système ;
les niveaux d'amélioration de couverture devant être pris en charge par lesdits un ou plusieurs des seconds noeuds sont configurés par le système ; et
les nombres d'émissions répétées des séquences d'accès aléatoire devant être pris en charge par lesdits un ou plusieurs des seconds noeuds sont configurés par le système.

16. Procédé pour configurer des ressources de canal d'accès aléatoire selon la revendication 13, dans lequel des informations du nombre d'émissions répétées des signalisations de réponse d'accès aléatoire sont indiquées par les premiers noeuds,
les premiers noeuds indiquant les informations du nombre d'émissions répétées des signalisations de réponse d'accès aléatoire d'au moins une des manières suivantes :

par indication des informations du nombre d'émissions répétées des signalisations de réponse d'accès aléatoire dans des informations de commande de liaison descendante ;
par une relation de correspondance existant entre des informations de nombre maximal de répétitions pris en charge par un PBCH envoyées par les premiers noeuds et les informations du nombre d'émissions répétées des signalisations de réponse d'accès aléatoire ;
par une relation de correspondance existant entre des informations de nombre maximal de répétitions pris en charge par des informations MIB envoyées par les premiers noeuds et les informations du nombre d'émissions répétées des signalisations de réponse d'accès aléatoire ;
par une relation de correspondance existant entre des informations de nombre maximal de répétitions pris en charge par des informations SIB envoyées par les premiers noeuds et les informations du nombre d'émissions répétées des signalisations de réponse d'accès aléatoire ;
par une relation de correspondance existant entre des informations de nombre de répétitions pris en charge par le PBCH et les informations du nombre d'émissions répétées des signalisations de réponse d'accès aléatoire ;
par une relation de correspondance existant entre des informations de nombre de répétitions pris en charge par le MIB et les informations du nombre d'émissions répétées des signalisations de réponse d'accès aléatoire ; et
par une relation de correspondance existant entre des informations de nombre de répétitions pris en charge par le SIB et les informations du nombre d'émissions répétées des signalisations de réponse d'accès aléatoire ;

ou
les informations du nombre d'émissions répétées des signalisations de réponse d'accès aléatoire étant indiquées par les types des seconds noeuds ou les niveaux d'amélioration de couverture ou le nombre pris en charge d'émissions répétées des séquences d'accès aléatoire.

17. Système pour configurer des ressources de canal d'accès aléatoire, comprenant des premiers noeuds et des seconds noeuds ; dans lequel
les premiers noeuds sont configurés pour : envoyer des informations de configuration de ressources de canal d'accès aléatoire aux seconds noeuds, les informations de configuration de ressources de canal d'accès aléatoire contenant des indications d'un ou plusieurs éléments d'informations de configuration de canal d'accès aléatoire ;

des informations de configuration de premières ressources étant au moins comprises dans lesdits un ou plusieurs éléments d'informations de configuration de canal d'accès aléatoire, les premières ressources étant :

soit des ressources utilisées pour envoyer des signalisations d'accès aléatoire et attribuées aux seconds noeuds ;

soit des ressources de départ utilisées pour envoyer les signalisations d'accès aléatoire et attribuées aux seconds noeuds ;

les premières ressources occupant une ou plusieurs premières unités de mesure temporelles dans un domaine temporel et occupant une ou plusieurs premières unités de mesure fréquentielles dans un domaine fréquentiel ;

les informations de configuration des premières ressources comprenant :

des informations d'indice de configuration des premières ressources ; et/ou
des informations de décalage fréquentiel des premières ressources ;

**caractérisé en ce que** les ressources de canal d'accès aléatoire sont divisées en un ou plusieurs sous-ensembles de ressources de canal d'accès aléatoire, les ressources de canal d'accès aléatoire étant multiplexées entre les sous-ensembles de ressources de canal d'accès aléatoire au moyen d'un multiplexage par répartition temporelle et/ou d'un multiplexage par répartition fréquentielle et/ou d'un multiplexage par répartition en code ;

dans lequel, quand les ressources de canal d'accès aléatoire sont multiplexées entre les sous-ensembles de ressources de canal d'accès aléatoire au moyen d'un multiplexage par répartition en code,

un sous-ensemble de ressources de canal d'accès aléatoire est formé à partir d'au moins un ensemble de séquences d'accès aléatoire prédéfini ;

le sous-ensemble de ressources de canal d'accès aléatoire prenant en charge un type des seconds noeuds pour émettre les séquences d'accès aléatoire,

les seconds noeuds étant divisés en types selon l'un des principes suivants :

par niveaux d'amélioration de couverture devant être pris en charge par les seconds noeuds,
par nombre d'émissions répétées des séquences d'accès aléatoire devant être pris en charge par les seconds noeuds,
par nombre de répétitions d'un canal de diffusion physique, PBCH, utilisé quand le PBCH est décodé avec succès par les seconds noeuds,
par nombre de répétitions d'un message de bloc d'informations maître, MIB, quand le message MIB est décodé avec succès par les seconds noeuds,
par nombre de répétitions d'un message de bloc d'informations système, SIB, quand le message SIB est décodé avec succès par les seconds noeuds, et
par nombre de répétitions du message MIB quand le PBCH est décodé avec succès par les seconds noeuds,

les seconds noeuds étant un ou plusieurs terminaux ou un ou plusieurs groupes de terminaux, le terminal étant un équipement utilisateur de communication du type machine, UE MTC.

FIG. 1

subframe 0, subframe 1, subframe 2, subframe 3, subframe 4, subframe 5, subframe 6, subframe 7, subframe 8, subframe 9

RA0, RA1, RA2, RA3, RA4

PRB index12

PRB index7

frame k    frame k+1              frame k+m

... ...                                      ... ...

PRB
index 12

RA (0)    RA (1)    RA (2)    RA (3)    RA (4)    RA (5)    RA (6)    RA (7)    RA (8)    RA (9)

PRB
index 7

subframe 0   subframe 1   subframe 2   subframe 3   subframe 4   subframe 5   subframe 6   subframe 7   subframe 8   subframe 9   subframe 0   subframe 1   subframe 2   subframe 3   subframe 4   subframe 5   subframe 6   subframe 7   subframe 8   subframe 9

FIG. 2

EP 3 032 910 B1

frame k    frame k+1              frame k+m

...  ...                              ...  ...

subset1

subset 2

RA(0)   RA(1)   RA(2)   RA(3)   RA(4)   RA(5)   RA(6)   RA(7)   RA(8)   RA(9)

subframe 0
subframe 1
subframe 2
subframe 3
subframe 4
subframe 5
subframe 6
subframe 7
subframe 8
subframe 9
subframe 0
subframe 1
subframe 2
subframe 3
subframe 4
subframe 5
subframe 6
subframe 7
subframe 8
subframe 9

FIG. 3

FIG. 4

FIG. 5

FIG. 6

PRB index 42
PRB index 37
PRB index 12
PRB index 7

$f_{RA}=0$
$f_{RA}=1$
$f_{RA}=2$
$f_{RA}=3$
$f_{RA}=4$

subframe 0
subframe 1
subframe 2
subframe 3
subframe 4
subframe 5
subframe 6
subframe 7
subframe 8
subframe 9

EP 3 032 910 B1

FIG. 8

FIG. 9

FIG. 10

FIG. 11

frame 0    frame 1              frame k

... ...                              ... ...

PRB
12

PRB 7

RA(0)  RA(1)  RA(2)  RA(3)  RA(4)  RA(5)  RA(6)  RA(7)  RA(8)  RA(9)

subframe 0  subframe 1  subframe 2  subframe 3  subframe 4  subframe 5  subframe 6  subframe 7  subframe 8  subframe 9

RA(0)~RA(4)：Normal MTC UE                    RA(5)：Coverage improvement level 1 MTC UE

RA(6)~RA(7)：Coverage improvement level 2 MTC UE    RA(8)~RA(9)：Coverage improvement level 2 MTC UE

FIG. 13

frame 0    frame 1    ... ...    frame k    ... ...

PRB 42
PRB 37

| RA(0) | RA(1) | RA(2) | RA(3) | RA(4) | RA(5) | RA(6) | RA(7) | RA(8) | RA(9) |

PRB 12
PRB 7

| RA(0) | RA(1) | RA(2) | RA(3) | RA(4) | RA(5) | RA(6) | RA(7) | RA(8) | RA(9) |

subframe 0  subframe 1  subframe 2  subframe 3  subframe 4  subframe 5  subframe 6  subframe 7  subframe 8  subframe 9  subframe 0  subframe 1  subframe 2  subframe 3  subframe 4  subframe 5  subframe 6  subframe 7  subframe 8  subframe 9

FIG. 13

frame 0    frame 1                    frame k

... ...                                    ... ...

PRB 42
PRB 37

RA(0) | RA(1) | RA(2) | RA(3) | RA(4) | RA(5) | RA(6) | RA(7) | RA(8) | RA(9)

PRB 12
PRB 7

RA(0) | RA(1) | RA(2) | RA(3) | RA(4) | RA(5) | RA(6) | RA(7) | RA(8) | RA(9)

subframe 0 | subframe 1 | subframe 2 | subframe 3 | subframe 4 | subframe 5 | subframe 6 | subframe 7 | subframe 8 | subframe 9 | subframe 0 | subframe 1 | subframe 2 | subframe 3 | subframe 4 | subframe 5 | subframe 6 | subframe 7 | subframe 8 | subframe 9

RA(0)~RA(4):  Normal MTC UE                              RA(5):  Coverage improvement level 1 MTC UE

RA(6)~RA(7):  Coverage improvement level 2 MTC UE    RA(8)~RA(9):  Coverage improvement level 2 MTC UE

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013083753 A1
- WO 2012173428 A2

- CN 102056300 A